# EUROPÄISCHE PATENTSCHRIFT

(11) **EP 4 197 093 B1**
(45) Veröffentlichungstag und Bekanntmachung des Hinweises auf die Patenterteilung: **14.08.2024**
(21) Anmeldenummer: 21745711.8
(22) Anmeldetag: 13.07.2021
(51) Int. Cl.: H02K 3/28, H02K 3/12

(54) **STATOR FÜR EINE ELEKTRISCHE MASCHINE UND ELEKTRISCHE MASCHINE**
STATOR FOR AN ELECTRIC MACHINE, AND ELECTRIC MACHINE
STATOR POUR UNE MACHINE ÉLECTRIQUE, ET MACHINE ÉLECTRIQUE

(30) Priorität: 13.08.2020 DE 102020121347
(43) Veröffentlichungstag der Anmeldung: 21.06.2023
(73) Patentinhaber: Valeo eAutomotive Germany GmbH, 91056 Erlangen (DE)
(72) Erfinder: DOTZ, Boris, 97616 Bad Neustadt a.d.Saale (DE)
(74) Vertreter: Valeo Powertrain Systems
(86) Internationale Anmeldenummer: PCT/EP2021/069489
(87) Internationale Veröffentlichungsnummer: WO 2022/033788

(56) Entgegenhaltungen:
- EP-A1- 2 597 754
- EP-A1- 3 691 089
- EP-A2- 1 708 339
- EP-A2- 3 029 809
- EP-A2- 3 029 810
- WO-A1-2019/062903
- WO-A1-2019/062906
- WO-A1-2019/062907
- WO-A1-2019/062918
- CN-A- 111 293 811
- CN-A- 111 463 944
- DE-T5- 112017 000 116
- DE-U1- 202019 103 297
- US-A1- 2011 012 472
- US-A1- 2013 076 188
- US-A1- 2014 125 186
- US-A1- 2014 125 187
- US-A1- 2014 184 013
- US-A1- 2015 054 374
- US-A1- 2020 235 623
- US-A1- 2021 296 956
- US-B2- 10 110 078
- US-B2- 9 455 605

## Beschreibung

Die vorliegende Erfindung betrifft einen Stator für eine elektrische Maschine. Daneben betrifft die Erfindung eine elektrische Maschine zum Antreiben eines Fahrzeugs.

Die DE 20 2019 103 297 U1 offenbart einen Stator mit einer Statorwicklungsanordnungsstruktur eines Antriebsmotors, in der Haarnadelsegmente in Form einer Haarnadel, die jeweils zwei Beine aufweisen, die in ein Statorkern mit einer Mehrzahl von Schlitzen eingesetzt werden und in der die entgegengesetzt zum Statorkern positionierten Beine der Haarnadelsegmente gebogen und derart verbunden sind, dass sie eine Schaltung mit einem Reihenspulenbündel bilden. Eine Statorwicklung des Antriebsmotors besteht aus drei Phasen. Jede der Phasen der Statorwicklung des Antriebsmotors ist mittels zweier oder mehrerer parallel geschalteter Reihenspulenbündel gebildet. Die Beine der Haarnadelsegmente sind in unterschiedliche Schichten eingesetzt.

Dokument US 2014/125186 A1 offenbart einen Stator für eine elektrische Maschine des Standes der Technik.

Statoren mit einer aus Formleitern gebildeten Statorwicklung erfreuen sich insbesondere bei automotiven Anwendungen großer Beliebtheit, da sie sich besonders zur automatisierten Fertigung mit einer hohen Prozesszuverlässigkeit eignen und einfache Anschlussmöglichkeiten für die Phasen ermöglichen. Die Herausforderung besteht darin, die für die Ausbildung der Statorwicklung erforderliche Anzahl an Windungen und die gewünschte Anzahl an Pfaden auszubilden und gleichzeitig Symmetrieanforderungen einzuhalten, einen geringen Wicklungsüberhang zu realisieren und einfache Anschlussmöglichkeiten für die Phasen bereitzustellen. Gewünscht wird ferner ein Drehfeld hoher Qualität beim Betrieb der elektrischen Maschine mit geringen Oberwellen und ohmschen Verlusten in der Statorwicklung. Der Erfindung liegt mithin die Aufgabe zugrunde, eine verbesserte Möglichkeit zum Betrieb eines Stators für eine elektrische Maschine anzugeben.

Zur Lösung dieser Aufgabe wird erfindungsgemäß ein Stator für eine elektrische Maschine vorgeschlagen, aufweisend eine Anzahl N ≥ 3 Phasen, eine Anzahl P ≥ 2 Polpaare, eine Lochzahl q ≥ 2, einen Statorkern, der mehrere in einer Umfangsrichtung ausgebildete Nuten aufweist, und mehrere Formleiter, die in einer ersten bis vierten Schicht radial geschichtet in den Nuten angeordnet sind, wobei die erste bis vierte Schicht entsprechend ihrer Reihenfolge in einer Radialrichtung benannt sind; wobei eine erste Orientierung und eine der ersten Orientierung entgegensetzte zweite Orientierung der Umfangsrichtung definiert sind; die Formleiter je Phase wenigstens zwei Pfade, die in Reihe oder parallel miteinander verschaltbar sind, ausbilden und in 2·P Wicklungszonen, die sich jeweils radial über die vier Schichten und in der Umfangsrichtung über wenigstens q+1 unmittelbar benachbarte Nuten erstrecken, angeordnet sind; wobei die Formleiter jedes Pfads in einer Reihenschaltung verschaltet sind, die durch an einer ersten Stirnseite der Statorkerns und an einer der ersten Stirnseite gegenüberliegenden zweiten Stirnseite des Statorkerns angeordnete Verbinder realisiert ist; wobei jeder Pfad Gruppen erster Art von in Reihe geschalteten Formleitern und Gruppen zweiter Art von in Reihe geschalteten Formleitern aufweist; wobei Formleiter der Gruppen erster Art über die Wicklungszonen in Umfangsrichtung abwechselnd einerseits in der ersten und vierten Schicht und andererseits in der zweiten und dritten Schicht angeordnet sind; wobei Formleiter der Gruppen zweiter Art in Wicklungszonen, in denen die Formleiter der Gruppen erster Art in der ersten und vierten Schicht angeordnet sind, in der zweiten und dritten Schicht und in Wicklungszonen, in denen die Formleiter der Gruppen erster Art in der zweiten und dritten Schicht angeordnet sind, in der ersten und vierten Schicht angeordnet sind.

Der erfindungsgemäße Stator zeichnet sich insbesondere dadurch aus, dass sich die Wicklungszonen, in denen die Formleiter der Pfade einer jeweiligen Phase angeordnet sind, über wenigstens drei unmittelbar benachbarte Nuten und die vier Schichten erstrecken, sodass entlang einer Axialrichtung eine räumliche Verschiebung des magnetischen Drehfeldes in Umfangsrichtung erzeugt werden kann. So kann die Effizienz, das Auftreten von Drehmomentrippeln bzw. Drehmomentwelligkeiten sowie das Auftreten von Geräuschen und Vibrationen im Vergleich zu Statoren mit Wicklungszonen, die sich jeweils über genau q Nuten erstrecken, merklich gesenkt werden. Dadurch, dass bei dem erfindungsgemäßen Stator die Formleiter der Gruppen erster Art in einer jeweiligen Wicklungszone in Umfangsrichtung abwechselnd in inneren und äußeren Schichten und die Formleiter der Gruppen zweiter Art in den entsprechend nicht belegten Schichten angeordnet sind, können die Verbinder an der ersten Stirnseite verschränkt (engl. imbricated) angeordnet werden, wodurch der Bauraum an den Stirnseiten effizient ausgenutzt und in der Folge ein geringer Wicklungsüberhang realisiert wird.

Die Lochzahl q ist die Anzahl der Nuten je Pol und Phase des Stators. Vorzugsweise ist q ≤ 6, bevorzugt q ≤ 4, besonders bevorzugt q ≤ 3. Bei dem erfindungsgemäßen Stator kann N ≤ 12, bevorzugt N ≤ 9, besonders bevorzugt N ≤ 6, sein. Es kann vorgesehen sein, dass P ≤ 20, bevorzugt P ≤ 16, besonders bevorzugt P ≤ 12, ist. Die Anzahl der Nuten ist bevorzugt kleiner als 200, besonders bevorzugt kleiner als 120. Die Anzahl der Nuten kann genau 2·P·N·q betragen. Vorzugsweise realisiert jede Wicklungszone einen Pol des Stators.

Zweckmäßigerweise befindet sich zwischen jedem Paar benachbarter Wicklungszonen einer Phase jeweils genau eine Wicklungszone der übrigen Phasen. Mit anderen Worten ist jedes Paar benachbarter Wicklungszonen einer Phase um q·(N-1) Nuten voneinander beabstandet.

In bevorzugter Ausgestaltung ist vorgesehen, dass in jeder Nut genau vier Formleiter aufgenommen sind und/oder N genau 3 beträgt und/oder P genau 4 beträgt und/oder q genau 2 beträgt. Vorzugsweise ist die erste Schicht die radial äußerste Schicht und/oder die vierte Schicht die radial innerste Schicht.

Die Formleiter können stabförmige Leiter, insbesondere aus Kupfer, sein. Die Formleiter sind typischerweise nicht biegeschlaff. Vorzugsweise nehmen vier Formleiter in den vier Schichten und/oder in der gesamten Nut wenigstens 60 %, bevorzugt wenigstens 80 %, der Querschnittsfläche einer Nut ein. Bevorzugt weisen die Formleiter einen, gegebenenfalls auch abgerundeten, rechteckigen Querschnitt auf. Jeder Formleiter kann sich vollständig in axialer Richtung durch eine der Nuten erstrecken.

Unter einem "Pfad" ist eine durch die Verbinder realisierte Reihenschaltung von Formleitern zu versehen, die auch als "Strompfad" bezeichnet werden kann. Vorzugsweise umfasst jeder Pfad P in Reihe geschaltete Gruppen erster Art und/oder P in Reihe geschaltete Gruppen zweiter Art. So kann durch die Gruppen erster Art bzw. die Gruppen zweiter Art ein vollständiger Umlauf in Umfangsrichtung um den Statorkern ausgebildet werden. Vorzugsweise belegen die Formleiter der Gruppen erster Art und der Gruppen zweiter Art eines jeweiligen Pfads jede Wicklungszone der Phase mindestens einmal.

Der Statorkern kann durch eine Vielzahl von geschichtet miteinander fest verbundenen Einzelblechen ausgebildet sein. Insbesondere bildet der Statorkern ein Blechpaket aus. Bevorzugt erstreckt sich jede Nut parallel zu einer Mittelachse, entlang welcher sich ein vom Statorkern umgebener Aufnahmeraum für einen Rotor erstreckt. Die erste Orientierung entspricht vorzugsweise von der ersten Stirnseite aus gesehen dem Uhrzeigersinn.

In vorteilhafter Weiterbildung des erfindungsgemäßen Stators kann vorgesehen sein, dass die Formleiter einer jeweiligen Gruppe erster Art ein bezüglich der Reihenschaltung äußerer erster Formleiter, ein bezüglich der Reihenschaltung unmittelbar mit dem ersten Formleiter verbundener zweiter Formleiter, ein bezüglich der Reihenschaltung unmittelbar mit dem zweiten Formleiter verbundener dritter Formleiter und ein bezüglich der Reihenschaltung unmittelbar mit dem dritten Formleiter verbundener vierter Formleiter sind und der erste Formleiter der Gruppe erster Art in der ersten Schicht einer ersten Wicklungszone für die Gruppe erster Art, der zweite Formleiter der Gruppe erster Art in der zweiten Schicht einer entlang der ersten Orientierung zur ersten Wicklungszone für die Gruppe erster Art benachbarten zweiten Wicklungszone für die Gruppe erster Art, der dritte Formleiter der Gruppe erster Art in der vierten Schicht der ersten Wicklungszone für die Gruppe erster Art und der vierte Formleiter der Gruppe erster Art in der dritten Schicht der zweiten Wicklungszone für die Gruppe erster Art angeordnet sind. Mit anderen Worten bilden die Formleiter einer jeweiligen Gruppe erster Art und die sie verbindenden Verbinder eine Leiterschleife aus.

Bevorzugt ist die erste Wicklungszone für solcher Gruppen erster Art, die bezüglich der Reihenschaltung unmittelbar mit dem vierten Formleiter einer anderen Gruppe erster Art verbunden sind, entlang der ersten Orientierung benachbart zur zweiten Wicklungszone für die andere Gruppe erster Art. Folglich erstrecken sich die Gruppen erster Art entlang der ersten Orientierung um den Stator. Dadurch wird ein Wicklungsfortschritt entlang der ersten Orientierung um jeweils eine Wicklungszone von einer Gruppe erster Art zur bezüglich der Reihenschaltung nächsten Gruppe erster Art realisiert.

Ferner kann in vorteilhafter Weiterbildung des erfindungsgemäßen Stators vorgesehen sein, dass die Formleiter einer jeweiligen Gruppe zweiter Art ein bezüglich der Reihenschaltung äußerer ersten Formleiter, ein bezüglich der Reihenschaltung unmittelbar mit dem ersten Formleiter verbundener zweiter Formleiter, ein bezüglich der Reihenschaltung unmittelbar mit dem zweiten Formleiter verbundener dritter Formleiter und ein bezüglich der Reihenschaltung unmittelbar mit dem dritten Formleiter verbundener vierter Formleiter sind und der erste Formleiter der Gruppe zweiter Art in der zweiten Schicht einer ersten Wicklungszone für die Gruppe zweiter Art, der zweite Formleiter der Gruppe zweiter Art in der ersten Schicht einer entlang der zweiten Orientierung zur ersten Wicklungszone für die Gruppe zweiter Art benachbarten zweiten Wicklungszone für die Gruppe zweiter Art, der dritte Formleiter der Gruppe zweiter Art in der dritten Schicht einer entlang der zweiten Orientierung zur zweiten Wicklungszone für die Gruppe zweiter Art benachbarten dritten Wicklungszone für die Gruppe zweiter Art und der vierte Formleiter der Gruppe zweiter Art in der vierten Schicht einer entlang der zweiten Orientierung zur dritten Wicklungszone für die Gruppe zweiter Art benachbarten vierten Wicklungszone für die Gruppe zweiter Art, angeordnet sind.

Bevorzugt ist der erste Formleiter solcher Gruppen zweiter Art, die bezüglich der Reihenschaltung unmittelbar mit dem vierten Formleiter einer anderen Gruppe zweiter Art verbunden ist, in der dritten Wicklungszone für die andere Gruppe zweiter Art angeordnet. Folglich erstrecken sich die Gruppen erster Art entlang der zweiten Orientierung um den Stator. Die Gruppen zweiter Art bilden kombiniert eine Wellenwicklung und eine Halbschleife aus.

Bevorzugt ist vorgesehen, dass der bezüglich der Reihenschaltung äußere Formleiter der Gruppe zweiter Art, der bezüglich der Reihenschaltung unmittelbar mit dem bezüglich der Reihenschaltung äußeren Formleiter ersten Gruppe verbunden ist, in einer Wicklungszone angeordnet ist, die entlang der ersten Orientierung benachbart zur Wicklungszone ist, in der sich der äußere Formleiter der ersten Gruppe befindet. Dabei können die miteinander verbundenen Formleiter der Gruppe erster Art und Gruppe zweiter Art durch einen Verbinder verbunden sein, der lediglich einen Versatz um eine Schicht realisiert. Insbesondere kann so ein zu den Gruppen erster Art gegensinniger Wicklungsfortschritt erzielt werden.

Gemäß einer vorteilhaften ersten Ausgestaltungsform des erfindungsgemäßen Stators ist vorgesehen, dass sich jede Wicklungszone über genau q+2 Nuten erstreckt. Dies ermöglicht die Ausbildung eines gestaffelten Stators mit wenigstens zwei, bevorzugt genau zwei, Versprüngen innerhalb einer jeweiligen Wicklungszone.

Dabei wird es bevorzugt, wenn sich die zweite und dritte Schicht einer jeweiligen Wicklungszone in denselben Nuten befinden, wobei die erste Schicht der Wicklungszone gegenüber der zweiten und dritten Schicht um eine Nut entlang der zweiten Orientierung der Umfangsrichtung versetzt ist und die vierte Schicht gegenüber der zweiten und dritten Schicht um eine Nut entlang der ersten Orientierung versetzt ist. So bildet sich mit besonderem Vorteil eine Staffelung des Stators mit einer hervorragenden Nutdurchströmung aus, bei der gleichzeitig ein im Wesentlichen gleichgroßer Materialbedarf für die Ausbildung der Formleiter und Verbinder gemessen an einem nichtgestaffelten Stator, also einem solchen mit sich über genau q Nuten erstreckenden Wicklungszonen, erforderlich ist. Außerdem kann, insbesondere bei der zuvor beschriebenen Anordnung der Gruppen erster und zweiter Art, ein kompaktes Anschlussfenster realisiert werden, weil die bei äu-βeren Formleiter eines jeweiligen Pfads nah zusammenrücken.

Alternativ ist es bei der ersten Ausgestaltungsform auch möglich, dass die erste Schicht der Wicklungszone gegenüber der zweiten und dritten Schicht um eine Nut entlang der ersten Orientierung der Umfangsrichtung versetzt ist und die vierte Schicht gegenüber der zweiten und dritten Schicht um eine Nut entlang der zweiten Orientierung versetzt ist.

Gemäß einer vorteilhaften zweiten Ausgestaltungsform des erfindungsgemäßen Stators ist vorgesehen, dass sich jede Wicklungszone über genau q+1 Nuten erstreckt. Dies ermöglicht die Ausbildung eines gestaffelten Stators mit wenigstens einem, bevorzugt genau einem, Versprung innerhalb einer jeweiligen Wicklungszone.

Dabei wird es bevorzugt, wenn sich die erste bis dritte Schicht einer jeweiligen Wicklungszone in denselben Nuten befinden und die vierte Schicht der Wicklungszone gegenüber der ersten bis dritten Schicht um eine Nut entlang der ersten Orientierung versetzt ist. Dadurch können, insbesondere bei der zuvor beschriebenen Anordnung der Gruppen erster und zweiter Art, in Umfangsrichtung zwei um eine Nut verkürzte Verbinder verwendet werden, was den Materialbedarf gegenüber einem nicht gestaffelten Stator reduziert und in der Folge ohmsche Verluste senkt. Dies erhöht wiederum die Effizienz der elektrischen Maschine.

Alternativ kann die vierte Schicht der Wicklungszone gegenüber der ersten bis dritten Schicht um eine Nut entlang der zweiten Orientierung versetzt sein.

Bei der zweiten Ausgestaltungsform kann alternativ vorgesehen sein, dass sich die zweite bis vierte Schicht einer jeweiligen Wicklungszone in denselben Nuten befinden und die erste Schicht der Wicklungszone gegenüber der zweiten und dritten Schicht um eine Nut entlang der zweiten Orientierung versetzt ist. Insbesondere bei der zuvor beschriebenen Anordnung der Gruppen erster und zweiter Art können hier im Vergleich zu einem nichtgestaffelten Stator drei Verbinder entlang der Umfangsrichtung um eine Nut verkürzt ausgebildet werden, wodurch ebenfalls, wie zuvor beschrieben, der Materialbedarf gesenkt werden kann.

Alternativ kann die erste Schicht der Wicklungszone gegenüber der zweiten und dritten Schicht um eine Nut entlang der ersten Orientierung versetzt sein.

In bevorzugter Weiterbildung des erfindungsgemäßen Stators ist vorgesehen, dass jede Wicklungszone 4·q zusammenhängende Aufnahmeplätze für jeweils einen der Formleiter bereitstellt und eine erste Teilwicklungszone bis q-te Teilwicklungszone umfasst, die sich jeweils über die vier Schichten erstrecken, wobei die erste Teilwicklungszone von der ersten Orientierung aus gesehen die ersten Aufnahmeplätze einer jeweiligen Schicht umfasst und die zweite Teilwicklungszone die an die Aufnahmeplätze der ersten Teilwicklungszone unmittelbar angrenzenden Aufnahmeplätze umfasst. Die Teilwicklungszonen sind mithin eine Untergliederung einer jeweiligen Wicklungszone. Dabei erstreckt sich jede Teilwicklungszone über so viele Nuten, wie die Anzahl der Nuten, über die sich eine Wicklungszone erstreckt, von der Lochzahl q abweicht. Jede Teilwicklungszone umfasst genau einen Aufnahmeplatz je Schicht.

Weiter bevorzugt sind die Gruppen erster Art und die Gruppen zweiter Art eines jeweiligen Pfads in unterschiedlichen Teilwicklungszonen angeordnet. Ferner können sich die Formleiter der Gruppe erster Art in derselben der ersten bis q-ten Teilwicklungszone der Wicklungszonen und die Formleiter der Gruppe zweiter Art in derselben der ersten bis q-ten Teilwicklungszone befinden. Alternativ oder zusätzlich kann vorgesehen sein, dass die Gruppen erster Art unterschiedlicher Pfade derselben Phase in unterschiedlichen Teilwicklungszonen und/oder die Gruppen zweiter Art unterschiedlicher Pfade derselben Phase in unterschiedlichen Teilwicklungszonen angeordnet sind. Die Formleiter eines jeweiligen Pfads können mithin jene Aufnahmeplätze belegen, welche die Formleiter des anderen Pfads nicht belegt.

Vorzugsweise ist bei dem erfindungsgemäßen Stator vorgesehen, dass die Formleiter eines jeweiligen Pfads bezüglich der Reihenschaltung abwechselnd durch Verbinder erster Art und zweiter Art verbunden sind. Vorteilhafterweise sind dabei bezüglich der Reihenschaltung äußere Formleiter eines jeweiligen Pfads durch einen Verbinder zweiter Art mit dem bezüglich der Reihenschaltung nächsten Formleiter verbunden. Insbesondere können so die äußeren Formleiter an der Stirnseite, an der sich die Verbinder erster Art befinden, kontaktiert bzw. angeschlossen werden.

Dabei können die Verbinder erster Art einstückig mit den durch sie verbundenen Formleitern ausgebildet sein und sich an der ersten Stirnseite aus dem Statorkern heraus erstrecken. Der Verbinder erster Art und die durch ihn verbundenen Formleitern sind vorzugsweise aus einem elektrischen leitfähigen Stab geformt, wobei der Verbinder erster Art insbesondere durch Biegen des Stabs ausgebildet ist.

Alternativ oder zusätzlich kann vorgesehen sein, dass die Verbinder zweiter Art zwei Verbindungselemente umfassen, die sich an der zweiten Stirnseite an die durch den Verbinder zweiter Art verbundenen Formleiter aus dem Statorkern heraus erstreckend anschließen und, insbesondere stoffschlüssig, miteinander elektrisch leitend verbunden sind. Auch die Formleiter und die an sie anschließenden Verbindungselemente können aus dem bzw. einem elektrisch leitfähigen Stab geformt sein, wobei die Verbindungselemente insbesondere durch Biegen des Stabs nach dem Einsetzen in den Statorkern ausgebildet sind.

Ein jeweiliger erster Verbinder, die durch ihn verbundenen Formleiter und die sich an die Formleiter anschließenden Verbindungselemente zweier zweiter Verbinder können folglich ein einstückiges Leitersegment ausbilden, welches auch als Haarnadelleiter (engl. hair pin conductor) oder U-Pin bezeichnet werden kann.

Vorzugsweise sind der erste und der zweite Formleiter einer jeweiligen Gruppe erster Art und/oder der erste und zweite Formleiter einer jeweiligen Gruppe zweiter Art durch Verbinder zweiter Art verbunden. Vorzugsweise sind der zweite und der dritte Formleiter einer jeweiligen Gruppe erster Art und/oder der zweite und der dritte Formleiter einer jeweiligen Gruppe zweiter Art durch Verbinder erster Art verbunden. Vorzugsweise sind der dritte und der vierte Formleiter einer jeweiligen Gruppe erster Art und/oder der dritte und der vierte Formleiter einer jeweiligen Gruppe zweiter Art durch Verbinder zweiter Art verbunden. Vorzugsweise sind die bezüglich der Reihenschaltung äußeren Formleiter zweier erster Gruppen durch Verbinder erster Art verbunden. Vorzugsweise sind die bezüglich der Reihenschaltung äußeren Formleiter zweier zweiter Gruppen durch Verbinder erster Art verbunden. Vorzugsweise sind der bezüglich der Reihenschaltung äußere Formleiter der Gruppen erster Art eines jeweiligen Pfads und der bezüglich der Reihenschaltung äußere Formleiter der Gruppen zweiter Art des Pfads durch Verbinder erster Art verbunden.

Erste Verbinder, welche in denselben Wicklungszonen angeordnete Formleiter unterschiedlicher Pfade derselben Phase verbinden und jeweils Formleiter derselben Gruppe eines der Pfade verbinden, sind bevorzugt miteinander verschränkt angeordnet. Sie bilden dann eine sog. U-und-U-Verschränkungstopologie (engl. U & U imbrication topology) aus.

Erste Verbinder, welche in denselben Wicklungszonen angeordnete Formleiter einer Gruppe erster Art mit jenen einer Gruppe zweiter Art verbinden, und zu unterschiedlichen Phasen derselben Phase gehören, sind bevorzugt axial ineinander angeordnet. Sie bilden dann eine sog. U-in-U-Topologie (engl. U-inside-U topology) aus. Dadurch kann der Wicklungsüberhang weiter reduziert werden.

Es wird bei dem erfindungsgemäßen Stator ferner bevorzugt, wenn die bezüglich der Reihenschaltung äußeren, zur Gruppe erster Art gehörenden Formleiter eines jeweiligen Pfads in derselben Wicklungszone angeordnet sind und die bezüglich der Reihenschaltung äußeren, zur Gruppe zweiter Art gehörenden Formleiter des Pfads in derselben Wicklungszone angeordnet sind und diese Wicklungszonen benachbart sind. So können Anschlüsse zur Kontaktierung der äußeren Formleiter nah beieinander ausgebildet werden, wodurch ein besonders kompaktes Anschlussfenster realisiert wird.

In vorteilhafter Weiterbildung des erfindungsgemäßen Stators umfasst dieser ferner eine Anschlusseinrichtung, welche die bezüglich der Reihenschaltung äußeren, zu einer der Gruppen erster Art gehörenden Formleiter der Pfade einer jeweiligen Phase verbindet und für jede Phase einen Phasenanschluss ausbildet und/oder die bezüglich der Reihenschaltung äußeren, zu einer der Gruppen zweiter Art gehörenden Formleiter eines jeweiligen Pfads einer jeweiligen Phase zu einem oder mehreren Sternpunkten verbindet. Alternativ umfasst der erfindungsgemäße Stator ferner eine Anschlusseinrichtung, welche die bezüglich der Reihenschaltung äußeren, zu einer der Gruppen zweiter Art gehörenden Formleiter der Pfade einer jeweiligen Phase verbindet und für jede Phase einen Phasenanschluss ausbildet und/oder die bezüglich der Reihenschaltung äußeren, zu einer der Gruppen erster Art gehörenden Formleiter eines jeweiligen Pfads einer jeweiligen Phase zu einem oder mehreren Sternpunkten verbindet. Mittels solcher Anschlusseinrichtungen kann der Stator mit elektrischer Leistung zum Ausbilden eines magnetischen Drehfelds versorgt werden.

An die bezüglich der Reihenschaltung äußeren, zur Gruppe erster Art gehörenden Formleiter eines jeweiligen Pfads und an die bezüglich der Reihenschaltung äußeren, zur Gruppe zweiter Art gehörenden Formleiter eines jeweiligen Pfads schließt sich bevorzugt an der ersten Stirnseite ein Anschlusselement an und an der zweiten Stirnseite ein Verbindungselement eines Verbinders zweiter Art an. Eine solche Anordnung kann auch als I-Pin bezeichnet werden. Das Anschlusselement erstreckt sich vorzugsweise weiter in Axialrichtung als die Verbinder erster Art. Die Anschlusselemente werden bevorzugt durch die Anschlusseinrichtung kontaktiert.

Die der Erfindung zugrunde liegende Aufgabe wird ferner gelöst durch eine elektrische Maschine zum Antreiben eines Fahrzeugs, umfassend einen Stator nach einem der vorhergehenden Ansprüche und einen innerhalb des Stators drehbar gelagerten Rotor. Die elektrische Maschine ist bevorzugt ein Elektromotor. Die elektrische Maschine kann z.B. eine permanenterregte Synchronmaschine bzw. ein permanenterregter Synchronmotor oder eine Asynchronmaschine/ Induktionsmaschine bzw. ein Asynchronmotor sein.

Weitere Vorteile und Einzelheiten der vorliegenden Erfindung ergeben sich aus den im Folgenden beschriebenen Ausführungsbeispielen und anhand der Zeichnungen. Diese sind schematische Darstellungen und zeigen:
- Fig. 1: eine Prinzipskizze eines Stators;
- Fig. 2: ein Blockschaltbild der Statorwicklung eines ersten Ausführungsbeispiels des erfindungsgemäßen Stators;
- Fig. 3: ein Wicklungsschema gemäß dem ersten Ausführungsbeispiel;
- Fig. 4: eine Prinzipskizze mehrerer Leitersegmente gemäß dem ersten Ausführungsbeispiel;
- Fig. 5: ein Wicklungsschema gemäß einem zweiten Ausführungsbeispiel des erfindungsgemäßen Stators;
- Fig. 6: ein Wicklungsschema gemäß einem dritten Ausführungsbeispiel des erfindungsgemäßen Stators; und
- Fig. 7: eine Prinzipskizze eines Fahrzeugs mit einem Ausführungsbeispiel der erfindungsgemäßen elektrischen Maschine.

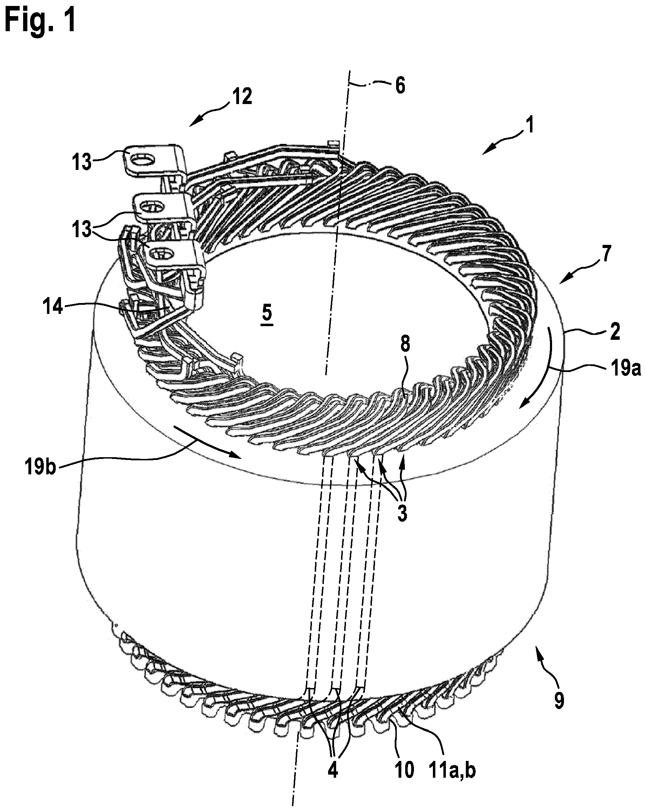

- Fig. 1: ist eine Prinzipskizze eines Stators 1.

Der Stator 1 weist einen Statorkern 2 auf, der eine Vielzahl von in einer Umfangsrichtung ausgebildeten Nuten 3 aufweist. Daneben weist der Stator 1 eine Vielzahl von Formleitern 4 auf, die geschichtet in den Nuten 3 angeordnet sind. Die Formleiter 4 erstrecken sich vollständig in axialer Richtung, also parallel zu einer einen Aufnahmeraum 5 für einen Rotor durchsetzenden Mittelachse 6, durch die Nuten 3.

An einer ersten Stirnseite 7 des Stators 1 sind die Formleiter 4 paarweise durch Verbinder erster Art 8 verbunden. Die Verbinder erster Art 8 sind dabei einstückig mit dem Paar Formleiter 4 ausgebildet und realisieren eine Biegung um 180°. An einer zweiten Stirnseite 9 des Stators 1 sind die Formleiter 4 paarweise durch Verbinder zweiter Art 10 verbunden. Die Verbinder zweiter Art 10 umfassen zwei sich einstückig an die verbundenen Formleiter 4 anschließende, gebogene Verbindungselemente 11a, 11b, die miteinander verbunden sind. Die Verbindung ist hier stoffschlüssig, insbesondere durch Schweißen, ausgebildet. Die Formleiter 4 und die Verbinder 8, 10 bilden eine Statorwicklung des Stators 1 aus.

In Fig. 1 ist ferner eine Anschlusseinrichtung 12 gezeigt, welche Phasenanschlüsse 13 und einen Sternpunkt 14 oder mehrere Sternpunkte der Statorwicklung ausbildet.

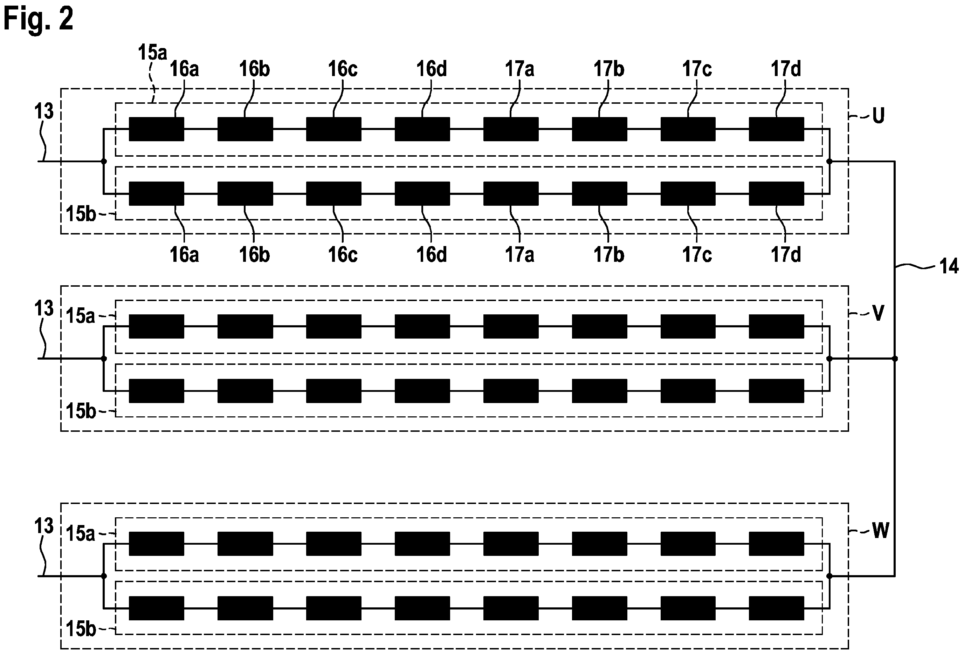

Fig. 2 ist ein Blockschaltbild einer Statorwicklung gemäß einem ersten Ausführungsbeispiel eines Stators 1, auf den sich die Ausführungen zum in Fig. 1 gezeigten Stator 1 übertragen lassen.

Der Stator 1 gemäß dem ersten Ausführungsbeispiel weist in der gezeigten exemplarischen Konfiguration N = 3 Phasen U, V, W und P = 4 Polpaare auf. Für jede Phase U, V, W bilden die Formleiter 4 einen ersten Pfad 15a und einen zweiten Pfad 15b aus. Die Pfade 15a, 15b einer jeweiligen Phase U, V, W sind mittels der Anschlusseinrichtung 12 parallelgeschaltet. Die Formleiter 4 eines jeweiligen Pfads 15a, 15b sind in Reihe geschaltet.

Jeder Pfad 15a, 15b umfasst P = 4 Gruppen erster Art 16a-d von in Reihe geschalteten Formleitern 4 und P = 4 Gruppen zweiter Art 17a-d von in Reihe geschalteten Formleiter 4. Die aufeinanderfolgend in Reihe geschalteten Gruppen erster Art 16a-d sind mit den aufeinanderfolgend in Reihe geschalteten Gruppen zweiter Art 17a-d in Reihe geschaltet. Mittels der Anschlusseinrichtung 12 sind die Gruppen erster Art 16a der Pfade 15a, 15b mit dem Phasenanschluss 13 verbunden und die Gruppen zweiter Art 17d der Pfade 15a, 15b mit dem Sternpunkt 14 verbunden. Gemäß einem alternativen Ausführungsbeispiel kann die Anschlusseinrichtung 12 auch zwei Sternpunkte 14 ausbilden, wobei ein erster Sternpunkt 14 die Gruppen zweiter Art 17d der ersten Pfade 15a der Phasen U, V, W verbindet und ein zweiter Sternpunkt 14 die Gruppen zweiter Art 17d der zweiten Pfade 15b der Phasen U, V, W verbindet.

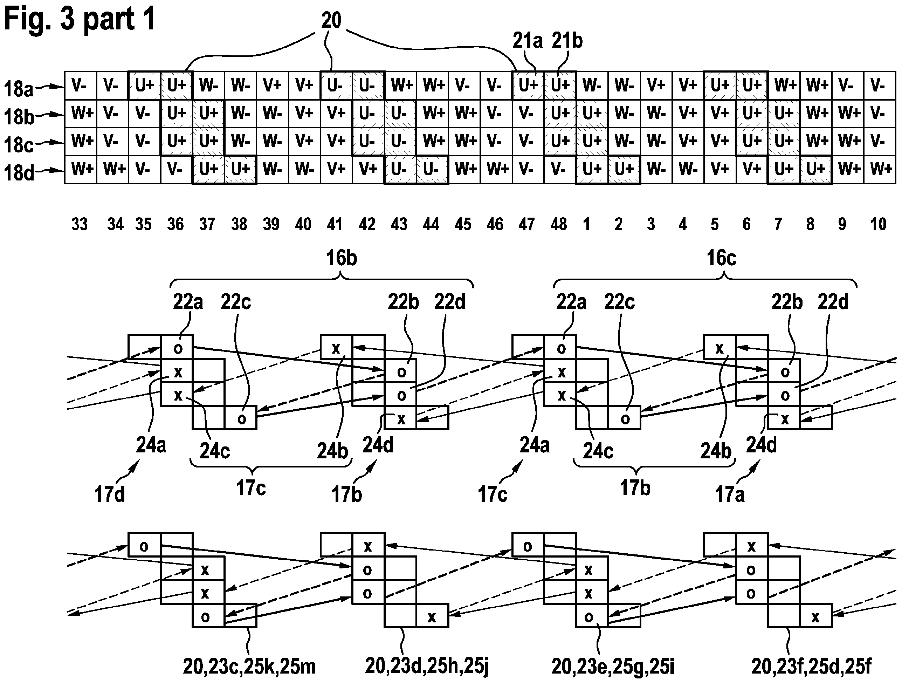

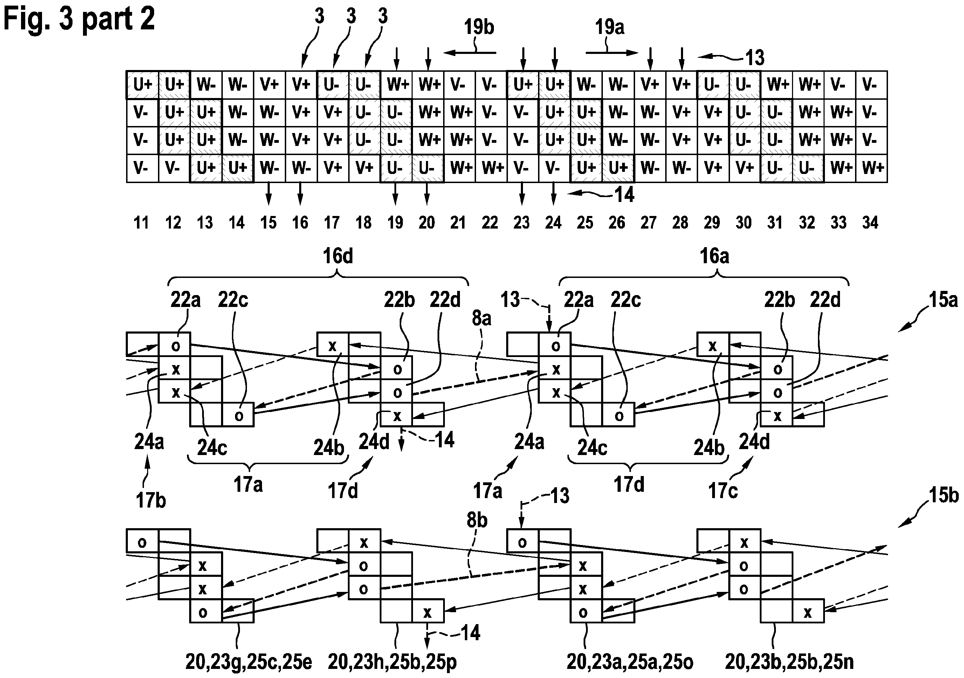

Fig. 3 ist ein Wicklungsschema der Statorwicklung gemäß dem ersten Ausführungsbeispiel.

Der Stator 1 weist eine Lochzahl q = 2 auf. Daraus ergibt sich vorliegend eine Gesamtzahl von 2·P·N·q = 48 Nuten 3. Die Lochzahl q beschreibt also das Verhältnis der Anzahl der Nuten 3 zum Produkt aus der Anzahl der Pole 2·P und der Anzahl der Phasen N.

Die Formleiter 4 sind dabei in einer ersten Schicht 18a, einer zweiten Schicht 18b, einer dritten Schicht 18c und einer vierten Schicht 18d angeordnet, wobei die Schichten 18a-d entsprechend ihrer Reihenfolge von radial außen nach radial innen benannt sind. Die erste Schicht 18a ist mithin die radial äußerste und die vierte Schicht 18d die radial innerste Schicht der vier Schichten 18a-d. In jeder Schicht 18a-d einer jeweiligen Nut 3 ist genau ein Formleiter 4 angeordnet. Anders gesagt bildet jede Schicht 18a-d einer jeweiligen Nut 3 einen Aufnahmeplatz für genau einen Formleiter 4 aus. Daraus ergibt sich eine Anzahl von insgesamt 2·P·N·q·L = 192 Aufnahmeplätzen bzw. Formleitern 4 des Stators 1, wobei L die Anzahl der Schichten 18a-d beschreibt.

Fig. 3 zeigt durch zwei oberhalb der oberen Tabelle angeordnete Pfeile eine erste Orientierung 19a der Umfangsrichtung, die von der ersten Stirnseite 7 des Stators 1 aus gesehen dem Uhrzeigersinn entspricht, und eine zweite Orientierung 19, die von der ersten Stirnseite 7 des Stators 1 aus betrachtet dem Gegenuhrzeigersinn entspricht (siehe auch Fig. 1). Ferner zeigt Fig. 3 unterhalb der oberen Tabelle eine Nutnummerierung von 1 bis 48. Die obere Tabelle in Fig. 3 zeigt, zu welcher Phase U, V, W ein in einem jeweiligen Aufnahmeplatz angeordneter Formleiter 4 gehört, wobei durch den Zusatz "+" bzw. "-" eine Stromrichtung eines elektrischen Stroms durch den entsprechenden Formleiter 4 bezeichnet ist. Ersichtlich sind die Formleiter je Phase U, V, W in 2·P = 8 Wicklungszonen 20 angeordnet, die jeweils genau q·L = 8 Aufnahmeplätze umfassen.

Im vorliegenden Ausführungsbeispiel erstreckt sich jede Wicklungszone 20 radial über die vier Schichten 18a-d und in der Umfangsrichtung über genau q+2 = 4 unmittelbar benachbarte Nuten 3. Die Wicklungszonen 20 sind wiederum in eine erste Teilwicklungszone 21a und in eine zweite Teilwicklungszone 21b untergliedert, die sich jeweils über alle vier Schichten 18a-d erstrecken. Dabei umfasst die erste Teilwicklungszone 21a die aus der ersten Orientierung 19a gesehen ersten Aufnahmeplätze der Wicklungszone 20 und die zweite Teilwicklungszone 21b die unmittelbar an die Aufnahmeplätze der ersten Teilwicklungszone 21a angrenzenden Aufnahmeplätze.

Unterhalb der Nutnummerierung sind in Fig. 3 die durch Formleiter 4 der Phase U belegten Aufnahmeplätze in den Wicklungszonen 20 getrennt für den ersten Pfad 15a und den zweiten Pfad 15b gezeigt. Dabei sind Formleiter 4 der Gruppen erster Art 16a-d an ihrem jeweiligen Aufnahmeplatz mit einem "o" gekennzeichnet und Formleiter der Gruppen zweiter Art 17a-d an ihrem jeweiligen Aufnahmeplatz mit einem "x" gekennzeichnet. Verbinder erster Art 8, die zwei Formleiter 4 in zwei unterschiedlichen Aufnahmeplätzen verbinden, sind mit gestrichelten Pfeilen zwischen den beiden Aufnahmeplätzen und Verbinder 10 zweiter Art, die zwei Formleiter 4 in zwei unterschiedlichen Aufnahmeplätzen verbinden, mit durchgezogenen Pfeilen zwischen den beiden Aufnahmeplätzen gekennzeichnet. Die Darstellung der Formleiter 4 und der Verbinder 8, 10 für die Phase U ist dabei repräsentativ für die übrigen Phasen V, W, bei denen die Anordnung der Formleiter 4 und Verbinder 8, 10 bis auf eine Verschiebung um q = 2 Nuten 3 in Umfangsrichtung jener der Phase U entspricht.

Die Anordnung der Formleiter 4 der Gruppen erster Art 16a-d und der Gruppen zweiter Art 17a-d in den jeweiligen Schichten 18a-d der Wicklungszonen 20 gestaltet sich wie folgt: Die mit "o" gekennzeichneten Formleiter 4 der Gruppen erster Art 16a-d sind über die Wicklungszonen 20 in Umfangsrichtung abwechselnd einerseits in der ersten Schicht 18a und der vierten Schicht 18d und andererseits abwechselnd in der zweiten Schicht 18b und der dritten Schicht 18c angeordnet. Die mit "x" gekennzeichneten Formleiter der Gruppen zweiter Art 17a-d sind in Wicklungszonen 20, in denen die Formleiter 4 der Gruppen erster Art 16a-d in der ersten Schicht 18a und der vierten Schicht 18b angeordnet sind, in der zweiten Schicht 18b und der dritten Schicht 18c angeordnet und in Wicklungszonen 20, in denen die Formleiter 4 der Gruppen erster Art 16a-d in der zweiten Schicht 18b und der dritten Schicht 18c angeordnet sind, in der ersten Schicht 18a und der vierten Schicht 18d angeordnet. Das heißt, dass in der ersten Schicht 18a und der vierten Schicht 18b einer jeweiligen Wicklungszone 20 entweder nur Formleiter 4 der Gruppen erster Art 16a-d oder Formleiter 4 der Gruppen zweiter Art 17a-d angeordnet sind und in der zweiten Schicht 18b und der dritten Schicht 18c der jeweiligen Wicklungszone 20 nur Formleiter 4 der entsprechend anderen Gruppen 17a-d bzw. 16a-d.

Im ersten Pfad 15a sind die Formleiter 4 der Gruppen erster Art 16a-d stets in der zweiten Teilwicklungszone 21b und die Formleiter 4 der Gruppen zweiter Art 17a-d stets in der ersten Teilwicklungszone 21a angeordnet. Im zweiten Pfad 15b sind die Formleiter 4 der Gruppen erster Art 16a-d stets in der ersten Teilwicklungszone 21a und die Formleiter 4 der Gruppen zweiter Art 17a-d stets in der zweiten Teilwicklungszone 21b angeordnet.

Die Formleiter 4 jeder Gruppe erster Art 16a-d eines Pfads 15a, 15b sind ein erster Formleiter 22a, ein zweiter Formleiter 22b, ein dritter Formleiter 22c und ein vierter Formleiter 22d, die in der Reihenfolge ihrer Benennung in Reihe geschaltet sind. In einer jeweiligen Gruppe erster Art 16a-d sind der erste Formleiter 22a in der ersten Schicht 18a einer ersten Wicklungszone 23a für die jeweilige Gruppe erster Art 16a-d angeordnet und der zweite Formleiter 22b in der zweiten Schicht 18b einer zweiten Wicklungszone 23b für die jeweilige Gruppe erster Art 16a-d, wobei die zweite Wicklungszone 23b für die jeweilige Gruppe erster Art 16a-d entlang der ersten Orientierung 19a benachbart zur ersten Wicklungszone 23a für die Gruppe erster Art 16a ist. Der dritte Formleiter 22c ist in der vierten Schicht 17d der ersten Wicklungszone 23a für die jeweilige Gruppe erster Art 16a angeordnet. Der vierte Formleiter 22d ist in der dritten Schicht 18c der zweiten Wicklungszone 23b für die jeweilige Gruppe erster Art 16b angeordnet. Der erste bis vierte Formleiter 22a-d sind mithin in einem Zickzack-Muster angeordnet und bilden eine Schleifenwicklung aus.

Der erste Formleiter 22a der Gruppe erster Art 16b, der bezüglich der Reihenschaltung unmittelbar mit dem vierten Formleiter 22d der Gruppe erster Art 16a verbunden ist, ist in einer ersten Wicklungszone 23c für die Gruppe erster Art 16b angeordnet. Die erste Wicklungszone 23c für die Gruppe erster Art 16b ist zur zweiten Wicklungszone 23b für die Gruppe erster Art 16a entlang der ersten Orientierung 19a benachbart. Entsprechend sind eine zweite Wicklungszone 23d für Gruppe erster Art 16b, eine erste Wicklungszone 24d und eine zweite Wicklungszone 23e für die Gruppe erster Art 16c sowie eine erste Wicklungszone 23f und eine zweite Wicklungszone 23g für die Gruppe erster Art 16d vorgesehen. Allgemein gesprochen ist der erste Formleiter 22a solcher Gruppen erster Art 16b-d, die bezüglich der Reihenschaltung unmittelbar mit dem vierten Formleiter 22d einer anderen Gruppe erster Art 16a-c verbunden sind, in einer ersten Wicklungszone 23c, 23e, 23g angeordnet, die zur zweiten Wicklungszone 23b, 23d, 23f für die andere Gruppe erster Art 16a-e entlang der ersten Orientierung 19a benachbart ist.

Die Gruppen erster Art 16a-d bilden somit beginnend vom ersten Formleiter 22a der ersten Gruppe erster Art 16a, der mit dem Phasenanschluss 13 verbunden ist, bis zum vierten Formleiter 22d der Gruppe erster Art 16d einen vollständigen Umlauf entlang der ersten Orientierung 19a um den Statorkern 2 aus.

Die Formleiter 4 jeder Gruppe zweiter Art 17a-d eines Pfads 15a, 15b sind ein erster Formleiter 24a, ein zweiter Formleiter 24b, ein dritter Formleiter 24c und ein vierter Formleiter 24d, die in der Reihenfolge ihrer Benennung in Reihe geschaltet sind. In einer jeweiligen Gruppe zweiter Art 17a-d sind der erste Formleiter 24a in der zweiten Schicht 18b einer ersten Wicklungszone 25a, 25e, 25i, 25m für die jeweilige Gruppe zweiter Art 17a-d und der zweite Formleiter 24b in einer zweiten Wicklungszone 25b, 25f, 25j, 25n für die jeweilige Gruppe zweiter Art 17a-d angeordnet, wobei die zweite Wicklungszone 25b, 25f, 25j, 25n für die jeweilige Gruppe zweiter Art 17a-d entlang der zweiten Orientierung 19b benachbart zur ersten Wicklungszone 25a, 25e, 25i, 25m für die jeweilige Gruppe zweiter Art 17a-d ist. Der dritte Formleiter 24c ist in einer dritten Wicklungszone 25c, 25g, 25k, 25o für die jeweilige Gruppe zweiter Art 17a-d angeordnet, wobei die dritte Wicklungszone 25c, 25g, 25k, 25o für die jeweilige Gruppe zweiter Art 17a-d entlang der zweiten Orientierung 19b benachbart zur zweiten Wicklungszone 25b, 25f, 25j, 25n für die jeweilige Gruppe zweiter Art 17a-d ist. Der vierte Formleiter 24d ist in einer vierten Wicklungszone 25d, 25h, 25l, 25p für die jeweilige Gruppe zweiter Art 17a-d angeordnet, wobei die vierte Wicklungszone 25d, 25h, 25l, 25p für die jeweilige Gruppe zweiter Art 17a-d entlang der zweiten Orientierung 19b benachbart zur dritten Wicklungszone 25c, 25g, 25k, 25o für die Gruppe zweiter Art 17a-d ist.

Der erste Formleiter 24a der zweiten Gruppe zweiter Art 17b, der bezüglich der Reihenschaltung unmittelbar mit dem vierten Formleiter 24d der ersten Gruppe zweiter Art 17a verbunden ist, ist in der ersten Wicklungszone 25e für die zweite Gruppe zweiter Art 17b angeordnet. Die erste Wicklungszone 25e für die zweite Gruppe zweiter Art 17b ist mithin dieselbe Wicklungszone 20 wie die dritte Wicklungszone 25c für die erste Gruppe zweiter Art 17a usw. Allgemein gesprochen ist der erste Formleiter 24a einer solcher Gruppen zweiter Art 17b-d, die bezüglich der Reihenschaltung unmittelbar mit dem vierten Formleiter 24d einer anderen Gruppe zweiter Art 17a-c verbunden ist, in der dritten Wicklungszone 25c, 25g, 25k für die andere Gruppe zweiter Art 17a-c angeordnet.

Jede Gruppe zweiter Art 17a-d bildet somit eine in die zweite Orientierung 19b fortscheitende Wicklung mit einer Halbschleife aus. Der vierte Formleiter 24d der vierten Gruppe zweiter Art 17d ist mit dem Sternpunkt 14 verbunden.

Insgesamt sind bei einer jeweiligen Phase U, V, W für beide Pfade 15a, 15b
- die erste Wicklungszone 23a der ersten Gruppe erster Art 16a, die erste Wicklungszone 25a der ersten Gruppe zweiter Art 17a und die dritte Wicklungszone 25o der vierten Gruppe zweiter Art 17d identisch,
- die zweite Wicklungszone 23b der ersten Gruppe erster Art 16a, die vierte Wicklungszone 25l der dritten Gruppe zweiter Art 17c und die zweite Wicklungszone 25n der vierten Gruppe zweiter Art 17d identisch,
- die erste Wicklungszone 23c der zweiten Gruppe erster Art 16b, die dritte Wicklungszone 25k der dritten Gruppe zweiter Art 17c und die erste Wicklungszone 25m der vierten Gruppe zweiter Art 17d identisch,
- die zweite Wicklungszone 23d der zweiten Gruppe erster Art 16b, die vierte Wicklungszone 25h der zweiten Gruppe zweiter Art 17b und die zweite Wicklungszone 25j der dritten Gruppe zweiter Art 17c identisch,
- die erste Wicklungszone 23e der dritten Gruppe erster Art 16c, die dritte Wicklungszone 25g der zweiten Gruppe zweiter Art 17b und die erste Wicklungszone 25i der dritten Gruppe zweiter Art 17c identisch,
- die zweite Wicklungszone 23f der dritten Gruppe erster Art 16c, die vierte Wicklungszone 25d der ersten Gruppe zweiter Art 17a, die zweite Wicklungszone 25f der zweiten Gruppe zweiter Art 17b identisch,
- die erste Wicklungszone 23g der vierten Gruppe erster Art 16d, die dritte Wicklungszone 25c der ersten Gruppe zweiter Art 17a und die erste Wicklungszone 25e der zweiten Gruppe zweiter Art 17b identisch und
- die zweite Wicklungszone 23h der vierten Gruppe erster Art 16d, die zweite Wicklungszone 25b der ersten Gruppe zweiter Art 17a und die vierte Wicklungszone 25p der vierten Gruppe zweiter Art 17d identisch.

Zur Verbindung der Gruppen erster Art 16a-d mit den Gruppen zweiter Art 17a-d in einem jeweiligen Pfad 15a, 15b ist der bezüglich der Reihenschaltung äußere Formleiter 24a der Gruppen zweiter Art 17a-d, also der erste Formleiter 24a der ersten Gruppe zweiter Art 17a in der Wicklungszone 25a, mit dem bezüglich der Reihenschaltung äußeren Formleiter 22d der Gruppen erster Art 16a-d, also dem vierten Formleiter 22d der vierten Gruppe erster Art 16d in der Wicklungszone 23h, verbunden. Die Wicklungszone 25a ist entlang der ersten Orientierung 19a benachbart zur Wicklungszone 23h.

Wie Fig. 3 ferner zu entnehmen ist, erstreckt sich jede Wicklungszone 20 über genau q+2 = 4 Nuten 3. Dabei sind die erste Schicht 18a gegenüber der zweiten und dritten Schicht 18b,18c entlang der zweiten Orientierung 19b um eine Nut 3 und die vierte Schicht 18d gegenüber der zweiten und dritten Schicht 18b, 18c um eine Nut 3 entlang der ersten Orientierung 19a versetzt.

Bei einer solchen Konfiguration realisieren in beiden Pfaden 15a, 15b die Verbinder erster Art 8, welche den zweiten Formleiter 22b und den dritten Formleiter 22c einer jeweiligen Gruppe erster Art 16a-d verbinden, die Verbinder erster Art 8, welche den vierten Formleiter 22d der Gruppen erster Art 16a-c und den ersten Formleiter 22a einer bezüglich der Reihenschaltung nachfolgenden Gruppe erster Art 16b-d verbinden, die Verbinder erster Art 8, welche den zweiten Formleiter 24b und den dritten Formleiter 24c einer jeweiligen Gruppe zweiter Art 17a-d verbinden, und die Verbinder erster Art 8, welche den vierten Formleiter 24d der Gruppen zweiter Art 17a-c und den ersten Formleiter 24a einer bezüglich der Reihenschaltung nachfolgenden Gruppe zweiter Art 17b-d verbinden, jeweils einen Versatz um fünf Nuten 3.

Ferner realisieren in beiden Pfaden 15a, 15b die Verbinder zweiter Art 10, welche den ersten Formleiter 22a und den zweiten Formleiter 22b einer jeweiligen Gruppe erster Art 16a-d verbinden, und die Verbinder zweiter Art 10, welche den ersten Formleiter 24a und den zweiten Formleiter 24b einer jeweiligen Gruppe zweiter Art 17a-d verbinden, jeweils einen Versatz um sieben Nuten 3. Die Verbinder zweiter Art 10, welche den dritten Formleiter 22c und den vierten Formleiter 22d einer jeweiligen Gruppe erster Art 16a-d verbinden, und die Verbinder zweiter Art 10, welche den dritten Formleiter 24c und den vierten Formleiter 24d einer jeweiligen Gruppe zweiter Art 17a-d verbinden, jeweils einen Versatz um fünf Nuten 3.

Für die Verbindung der bezüglich der Reihenschaltung äußeren Formleiteiter 22d, 24a der vierte Gruppe erster Art 16d und der ersten Gruppe zweiter Art 17a sind in den Pfaden 15a, 15b unterschiedliche Verbinder erster Art 8 (in Fig. 3 gesondert mit den Bezugszeichen 8a, 8b bezeichnet) vorgesehen. Beim ersten Pfad 15a realisiert der Verbinder erster Art 8a einen Versatz um fünf Nuten. Beim zweiten Pfad 15b realisiert der Verbinder erster Art 8b einen Versatz um sieben Nuten 3.

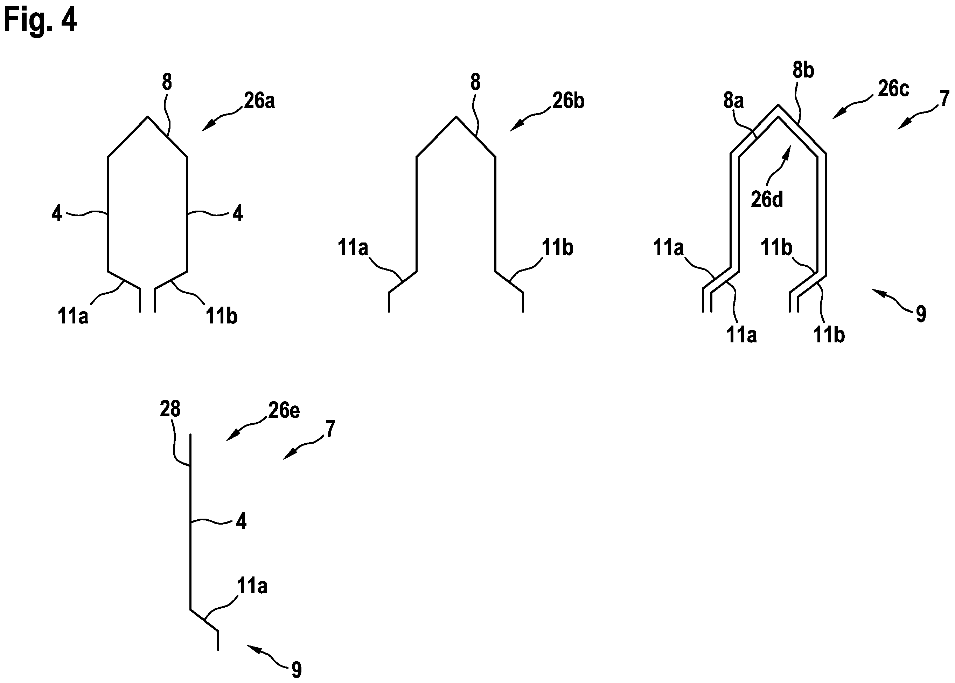

Fig. 4 ist eine Prinzipskizze mehrerer Leitersegmente 26a-d gemäß dem ersten Ausführungsbeispiel.

Die Leitersegmente 26a-d sind jeweils aus zwei Formleitern 4, einem Verbinder erster Art 8, 8a, 8b, der sich an die zwei Formleiter 4 an der ersten Stirnseite 7 anschließt und diese verbindet, und zwei Verbindungselementen 11a, 11b, die sich an der zweiten Stirnseite 9 an einen jeweiligen der zwei Formleiter 4 anschließen, ausgebildet. Das Leitersegment 26a-d ist hier exemplarisch einstückig ausgebildet, kann aber alternativ auch durch Zusammenfügen getrennter Komponenten ausgebildet sein. Jeweils zwei Verbindungselemente 11a, 11b unterschiedlicher Leitersegmente 26a-d bilden einen Verbinder zweiter Art 10 aus.

Bei dem Leitersegment 26a weisen die Verbindungselemente 11a, 11b zueinander in entgegensetzte Orientierungen 19a, 19b. Die verbundenen zweiten und dritten Formleiter 22b, 22c einer jeweiligen Gruppe erster Art 16a-d sowie die verbundenen vierten Formleiter 24d und ersten Formleiter 24a unterschiedlicher Gruppen zweiter Art 17a-d sind durch Leitersegmente 26a ausgebildet.

Bei dem Leitersegment 26b weisen die Verbindungelemente 11a, 11b von einander weg in entgegengesetzte Orientierungen 19a, 19b. Die verbundenen vierten Formleiter 22d und ersten Formleiter 22a unterschiedlicher Gruppen erster Art 16a-d sowie die verbundenen zweiten und dritten Formleiter 24b, 24c einer jeweiligen Gruppe zweiter Art 17a-d sind durch Leitersegmente 26b ausgebildet.

Bei den Leitersegmenten 26c, 26d sind die Verbindungselemente 11a, 11b gleich orientiert. Der Verbinder erster Art 8a des Leitersegments 26d ist dabei axial innerhalb des Verbinders erster Art 8b des Leitersegments 26c angeordnet. Folglich ist der Verbinder erster Art 8a axial kürzer als der Verbinder erster Art 8b ausgebildet. Das Leitersegment 26c bildet den bezüglich der Reihenschaltung äußeren Formleiter 4 der Gruppen erster Art 16a-d, der mit dem bezüglich der Reihenschaltung äußeren Formleiter 4 der Gruppen zweiter Art 17a-d verbunden ist, also hier den vierten Formleiter 22d der vierten Gruppe erster Art 16d und den ersten Formleiter 24a der ersten Gruppe zweiter Art 17a des zweiten Pfads 15b, aus. Das Leitersegment 26d bildet den bezüglich der Reihenschaltung äußeren Formleiter 4 der Gruppen erster Art 16a-d, der mit dem bezüglich der Reihenschaltung äußeren Formleiter 4 der Gruppen zweiter Art 17a-d verbunden ist, also hier den vierten Formleiter 22d der vierten Gruppe erster Art 16d und den ersten Formleiter 24a der ersten Gruppe zweiter Art 17a des ersten Pfads 15a aus.

Das Leitersegment 26e umfasst einen Formleiter 4, ein sich an den Formleiter 4 an der zweiten Stirnseite 9 anschließendes Verbindungselement 11a und ein Anschlusselement 28 zum Kontaktieren mit der Anschlusseinrichtung 12 (siehe Fig. 1). Die bezüglich der Reihenschaltung äußeren Formleiter 4 eines jeweiliges Pfads 15a, 15b, also hier der erste Formleiter 22a der ersten Gruppen erster Art 16a und ein vierter Formleiter 24d der vierten Gruppen zweiter Art 17d, sind durch Leitersegmente 26e ausgebildet.

In Fig. 4 sind die Leitersegmente 26a-e schematisch, insbesondere ohne genaue Darstellung der Anzahl der Nuten 3, um welche die Verbinder erster Art 10, 10a, 10b bzw. die Verbindungselemente 11a, 11b einen Versatz realisieren, gezeigt. Die Leitersegmente 26a-d können auch als U-Pins bzw. Haarnadelleiter und die Leitersegmente 26e als I-Pins aufgefasst werden. Die gesamte Statorwicklung wird dann auch als Haarnadelwicklung (engl. hair pin winding) bezeichnet.

Gemäß einem alternativen Ausführungsbeispiel sind die erste Schicht 18a gegenüber der zweiten und dritten Schicht 18b, 18c entlang der ersten Orientierung 19a um eine Nut 3 und die vierte Schicht 18d gegenüber der zweiten und dritten Schicht 18b, 18c um eine Nut 3 entlang der zweiten Orientierung 19b versetzt, wobei sich dann die durch die Verbinder erster und zweiter Art 8, 10 realisierten Versätze entsprechend ändern.

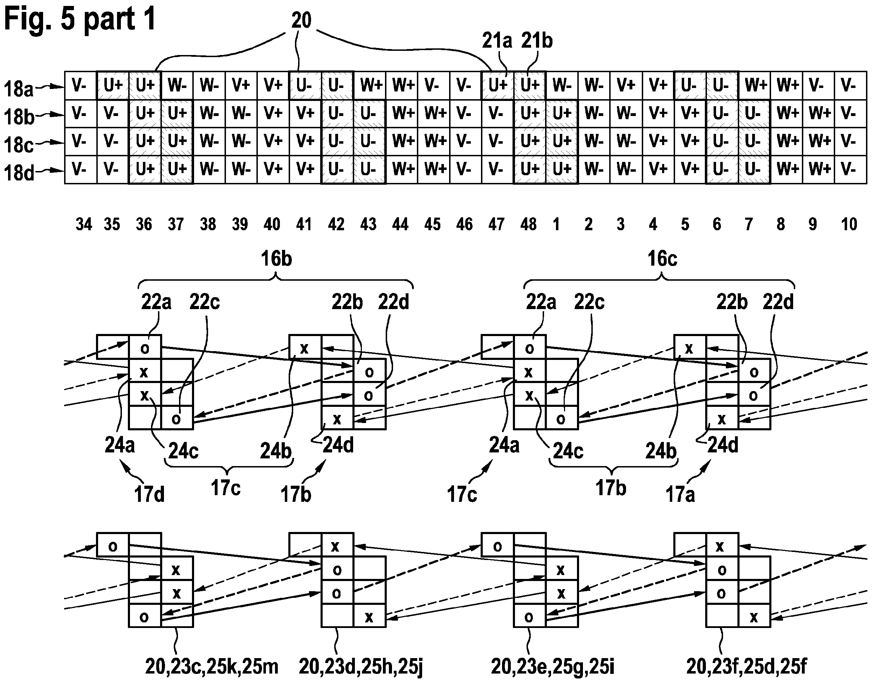

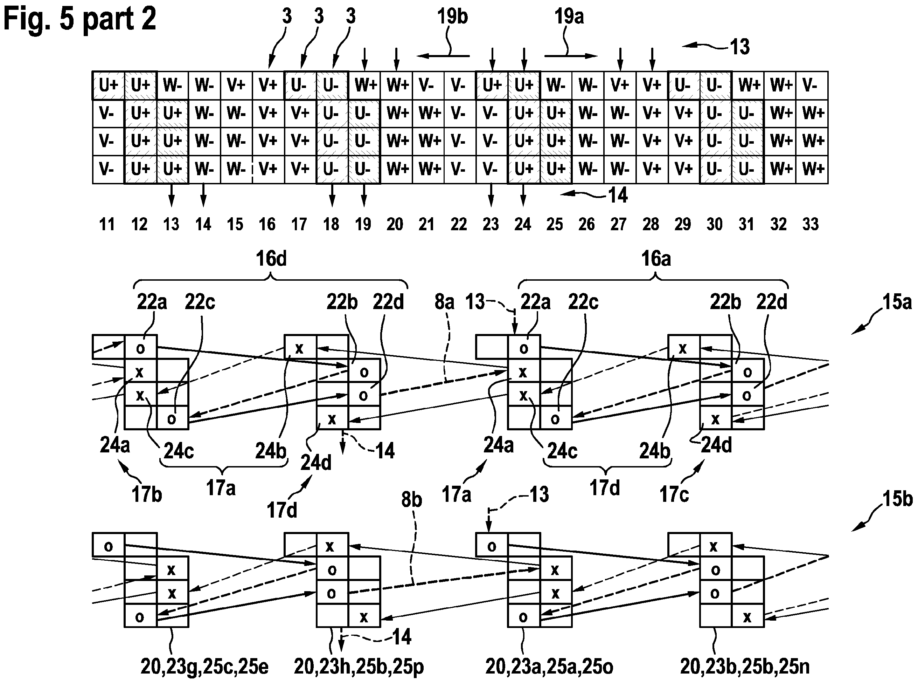

Fig. 5 ist ein Wicklungsschema gemäß einem zweiten Ausführungsbeispiel eines Stators 1. Soweit im Folgenden nichts Abweichendes beschrieben wird, lassen sich alle Ausführungen zum ersten Ausführungsbeispiel auf das zweite Ausführungsbeispiel übertragen. Dabei sind gleiche oder gleichwirkende Komponenten mit identischen Bezugszeichen versehen.

Bei dem zweiten Ausführungsbeispiel erstreckt sich jede Wicklungszone 20 über genau q+1 = 4 Nuten 3. Dabei ist die erste Schicht 18a um eine Nut 3 entlang der zweiten Orientierung 19b gegenüber den zweiten bis vierten Schicht 18b-d versetzt.

Bei einer solchen Konfiguration realisieren in beiden Pfaden 15a, 15b die Verbinder erster Art 8, welche den zweiten Formleiter 22b und den dritten Formleiter 22c einer jeweiligen Gruppe erster Art 16a-d verbinden, und die Verbinder erster Art 8, welche den vierten Formleiter 24d der Gruppen zweiter Art 17a-c und den ersten Formleiter 24a einer bezüglich der Reihenschaltung nachfolgenden Gruppe zweiter Art 17b-d verbinden, jeweils einen Versatz um sechs Nuten 3. Die Verbinder erster Art 8, welche den vierten Formleiter 22d der Gruppen erster Art 16a-c und den ersten Formleiter 22a einer bezüglich der Reihenschaltung nachfolgenden Gruppe erster Art 16b-d verbinden, und die Verbinder erster Art 8, welche den zweiten Formleiter 24b und den dritten Formleiter 24c einer jeweiligen Gruppe zweiter Art 17a-d verbinden, realisieren jeweils einen Versatz um fünf Nuten 3.

Ferner realisieren in beiden Pfaden 15a, 15b die Verbinder zweiter Art 10, welche den ersten Formleiter 22a und den zweiten Formleiter 22b einer jeweiligen Gruppe erster Art 16a-d verbinden, und die Verbinder zweiter Art 10, welche den ersten Formleiter 24a und den zweiten Formleiter 24b einer jeweiligen Gruppe zweiter Art 17a-d verbinden, jeweils einen Versatz um sieben Nuten 3. Die Verbinder zweiter Art 10, welche den dritten Formleiter 22c und den vierten Formleiter 22d einer jeweiligen Gruppe erster Art 16a-d verbinden, und die Verbinder zweiter Art 10, welche den dritten Formleiter 24c und den vierten Formleiter 24d einer jeweiligen Gruppe zweiter Art 17a-d verbinden, jeweils einen Versatz um sechs Nuten 3.

Gemäß einem alternativen Ausführungsbeispiel ist die erste Schicht 18a um eine Nut 3 entlang der ersten Orientierung 19a gegenüber den zweiten bis vierten Schicht 18b-d versetzt, wobei sich dann die durch die Verbinder erster und zweiter Art 8, 10 realisierten Versätze entsprechend ändern.

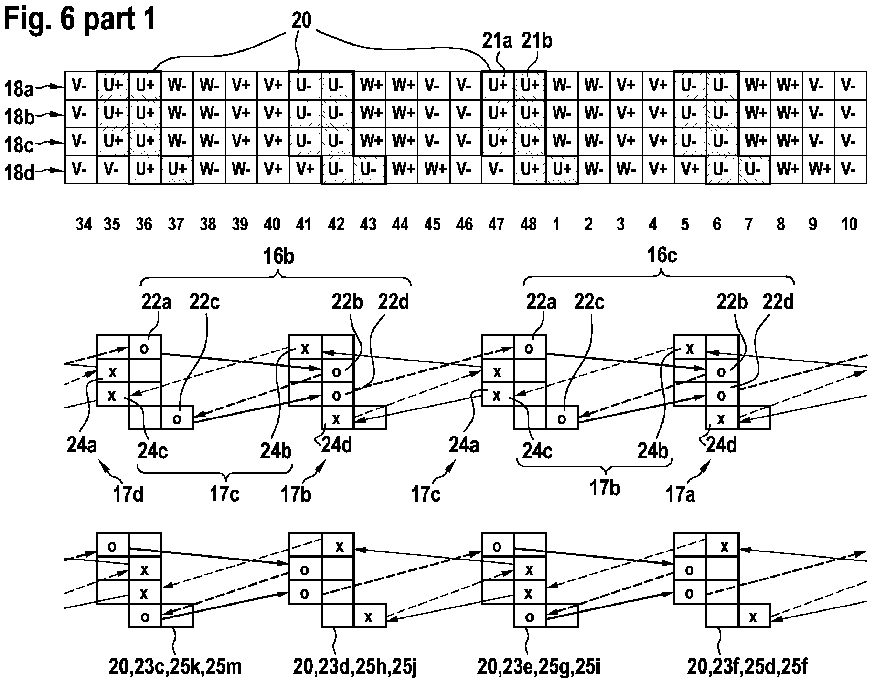

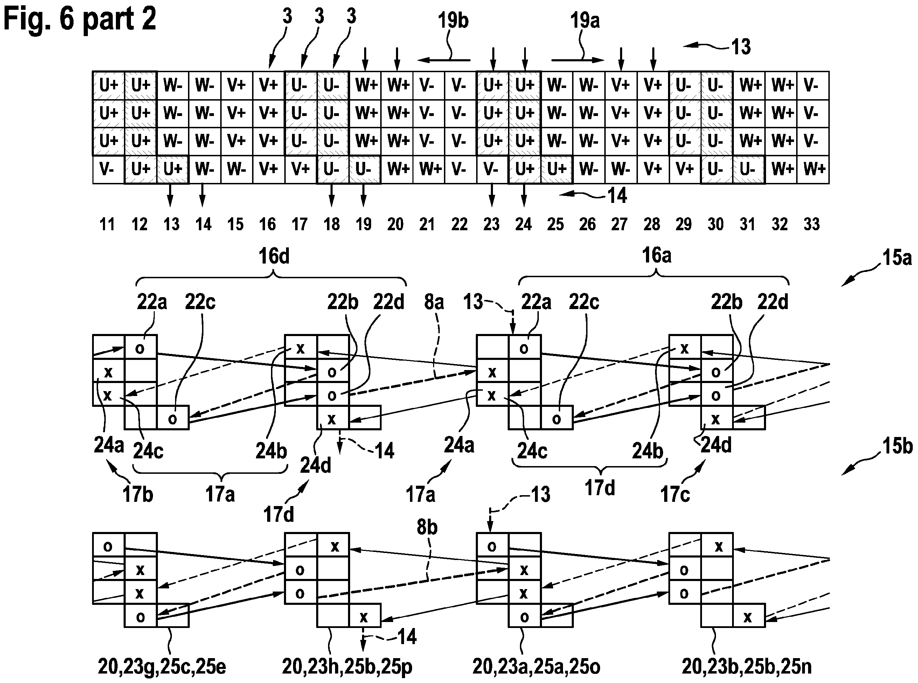

Fig. 6 ist ein Wicklungsschema gemäß einem dritten Ausführungsbeispiel eines Stators 1. Soweit im Folgenden nichts Abweichendes beschrieben wird, lassen sich alle Ausführungen zum zweiten Ausführungsbeispiel auf das dritte Ausführungsbeispiel übertragen. Dabei sind gleiche oder gleichwirkende Komponenten mit identischen Bezugszeichen versehen.

Beim dritten Ausführungsbeispiel ist die vierte Schicht 18d um eine Nut 3 entlang der ersten Orientierung 19a gegenüber der ersten bis dritten Schicht 18a-c versetzt.

Bei einer solchen Konfiguration realisieren bei beiden Pfaden 15a, 15b die Verbinder erster Art 8, welche den zweiten Formleiter 22b und den dritten Formleiter 22c einer jeweiligen Gruppe erster Art 16a-d verbinden, und die Verbinder erster Art 8, welche den vierten Formleiter 24d der Gruppen zweiter Art 17a-c und den ersten Formleiter 24a einer bezüglich der Reihenschaltung nachfolgenden Gruppe zweiter Art 17b-d verbinden, jeweils einen Versatz um fünf Nuten 3. Die Verbinder erster Art 8, welche den vierten Formleiter 22d der Gruppen erster Art 16a-c und den ersten Formleiter 22a einer bezüglich der Reihenschaltung nachfolgenden Gruppe erster Art 16b-d verbinden, und die Verbinder erster Art 8, welche den zweiten Formleiter 24b und den dritten Formleiter 24c einer jeweiligen Gruppe zweiter Art 17a-d verbinden, realisieren jeweils einen Versatz um sechs Nuten 3.

Ferner realisieren bei beiden Pfaden 15a, 15b die Verbinder zweiter Art 10, welche den ersten Formleiter 22a und den zweiten Formleiter 22b einer jeweiligen Gruppe erster Art 16a-d verbinden, und die Verbinder zweiter Art 10, welche den ersten Formleiter 24a und den zweiten Formleiter 24b einer jeweiligen Gruppe zweiter Art 17a-d verbinden, jeweils einen Versatz um sechs Nuten 3. Die Verbinder zweiter Art 10, welche den dritten Formleiter 22c und den vierten Formleiter 22d einer jeweiligen Gruppe erster Art 16a-d verbinden, und die Verbinder zweiter Art 10, welche den dritten Formleiter 24c und den vierten Formleiter 24d einer jeweiligen Gruppe zweiter Art 17a-d verbinden, jeweils einen Versatz um fünf Nuten 3.

Gemäß einem alternativen Ausführungsbeispiel ist die vierte Schicht 18d um eine Nut 3 entlang der zweiten Orientierung 19b gegenüber der ersten bis dritten Schicht 18a-c versetzt, wobei sich dann die durch die Verbinder erster und zweiter Art 8, 10 realisierten Versätze entsprechend ändern.

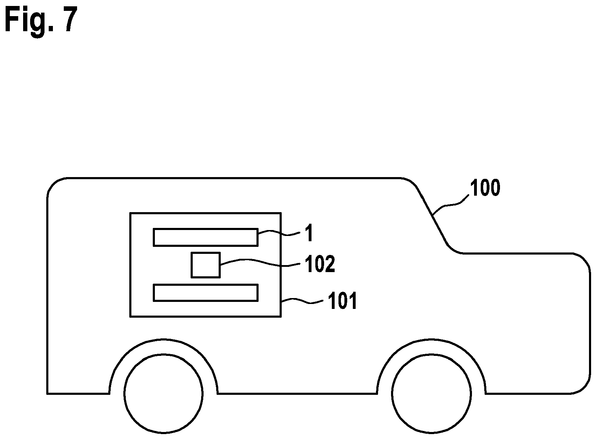

Fig. 7 eine Prinzipskizze eines Fahrzeugs 100 mit einem Ausführungsbeispiel einer elektrischen Maschine 101, beispielsweise einer Synchronmaschine oder eine Asynchronmaschine/ Induktionsmaschine, die als Elektromotor ausgebildet ist. Die elektrische Maschine 101 umfasst einen Stator 1 gemäß einem der zuvor beschriebenen Ausführungsbeispiele und einen Rotor 102, der drehbar innerhalb des Stators 1 gelagert ist. Im vorliegenden Ausführungsbeispiel ist der Rotor 102 exemplarisch permanenterregt.

## Patentansprüche

1. Stator (1) für eine elektrische Maschine (101), aufweisend
- eine Anzahl N ≥ 3 Phasen (U, V, W),
- eine Anzahl P ≥ 2 Polpaare,
- eine Lochzahl q ≥ 2,
- einen Statorkern (2), der mehrere in einer Umfangsrichtung ausgebildete Nuten (3) aufweist, und
- mehrere Formleiter (4, 22a-d, 24a-d), die in einer ersten bis vierten Schicht (18a-d) radial geschichtet in den Nuten (3) angeordnet sind, wobei die erste bis vierte Schicht (18a-d) entsprechend ihrer Reihenfolge in einer Radialrichtung benannt sind; wobei
eine erste Orientierung (19a) und eine der ersten Orientierung (19a) entgegensetzte zweite Orientierung (19b) der Umfangsrichtung definiert sind; wobei die Formleiter (4, 22a-d, 24a-d) je Phase (U, V, W) wenigstens zwei Pfade (15a, 15b), die in Reihe oder parallel miteinander verschaltbar sind, ausbilden und in 2·P Wicklungszonen (20, 23a-h, 25a-p), die sich jeweils radial über die vier Schichten (18a-d) und in der Umfangsrichtung über wenigstens q+1 unmittelbar benachbarte Nuten (3) erstrecken, angeordnet sind; wobei
die Formleiter (4, 22a-d, 24a-d) jedes Pfads (15a, 15b) in einer Reihenschaltung verschaltet sind, die durch an einer ersten Stirnseite (7) der Statorkerns (2) und an einer der ersten Stirnseite (7) gegenüberliegenden zweiten Stirnseite (9) des Statorkerns (2) angeordnete Verbinder (8, 8a, 8b, 10) realisiert ist; wobei jeder Pfad (15a, 15b) Gruppen erster Art (16a-d) von in Reihe geschalteten Formleitern (4, 22a-d) und Gruppen zweiter Art (17a-d) von in Reihe geschalteten Formleitern (24a-d) aufweist; wobei
Formleiter (22a-d) der Gruppen erster Art (16a-d) über die Wicklungszonen (20, 23a-h) in Umfangsrichtung abwechselnd einerseits in der ersten und vierten Schicht (18a, 18d) und andererseits in der zweiten und dritten Schicht (18b, 18c) angeordnet sind; wobei
Formleiter (4, 24a-d) der Gruppen zweiter Art (17a-d) in Wicklungszonen (20, 23a-h, 25a-p), in denen die Formleiter (4, 22a-d) der Gruppen erster Art (16a-d) in der ersten und vierten Schicht (18a, 18d) angeordnet sind, in der zweiten und dritten Schicht (18b, 18c) und in Wicklungszonen (20, 23a-h, 25a-p), in denen die Formleiter (4, 22a-d) der Gruppen erster Art (16a-d) in der zweiten und dritten Schicht (18b, 18c) angeordnet sind, in der ersten und vierten Schicht (18a, 18d) angeordnet sind.

2. Stator nach Anspruch 1, wobei
die Formleiter (4, 22a-d) einer jeweiligen Gruppe erster Art (16a-d) ein bezüglich der Reihenschaltung äußerer erster Formleiter (22a), ein bezüglich der Reihenschaltung unmittelbar mit dem ersten Formleiter (22a) verbundener zweiter Formleiter (22b), ein bezüglich der Reihenschaltung unmittelbar mit dem zweiten Formleiter (22b) verbundener dritter Formleiter (22c) und ein bezüglich der Reihenschaltung unmittelbar mit dem dritten Formleiter (22c) verbundener vierter Formleiter (22d) sind und
- der erste Formleiter (22a) der Gruppe erster Art (16a-d) in der ersten Schicht (18a) einer ersten Wicklungszone (23a, 23c, 23e, 23g) für die Gruppe erster Art (16a-d),
- der zweite Formleiter (22b) der Gruppe erster Art (16a-d) in der zweiten Schicht (18b) einer entlang der ersten Orientierung (19a) zur ersten Wicklungszone (23a, 23c, 23e, 23g) für die Gruppe erster Art (16a-d) benachbarten zweiten Wicklungszone (23b, 23d, 23f, 23h) für die Gruppe erster Art (16a-d),
- der dritte Formleiter (22c) der Gruppe erster Art (16a-d) in der vierten Schicht (18d) der ersten Wicklungszone (23a, 23c, 23e, 23g) für die Gruppe erster Art (16a-d) und
- der vierte Formleiter (22d) der Gruppe erster Art (16a-d) in der dritten Schicht (18c) der zweiten Wicklungszone (23b, 23d, 23f, 23h) für die Gruppe erster Art (16a-d)
angeordnet sind, wobei die erste Wicklungszone (23c, 23e, 23g) für solche Gruppen erster Art (16b-d), die bezüglich der Reihenschaltung unmittelbar mit dem vierten Formleiter (22d) einer anderen Gruppe erster Art (16a-c) verbunden sind, entlang der ersten Orientierung (19a) benachbart zur zweiten Wicklungszone (23b, 23d, 23f) für die andere Gruppe erster Art (16a-c) ist.

3. Stator nach Anspruch 1 oder 2, wobei
die Formleiter (4, 24a-d) einer jeweiligen Gruppe zweiter Art (17a-d) ein bezüglich der Reihenschaltung äußerer erster Formleiter (24a), ein bezüglich der Reihenschaltung unmittelbar mit dem ersten Formleiter (24a) verbundener zweiter Formleiter (24b), ein bezüglich der Reihenschaltung unmittelbar mit dem zweiten Formleiter (24b) verbundener dritter Formleiter (24c) und ein bezüglich der Reihenschaltung unmittelbar mit dem dritten Formleiter (24c) verbundener vierter Formleiter (24d) sind und
- der erste Formleiter (24a) der Gruppe zweiter Art (17a-d) in der zweiten Schicht (18b) einer ersten Wicklungszone (25a, 25e, 25i, 25m) für die Gruppe zweiter Art (17a-d),
- der zweite Formleiter (24b) der Gruppe zweiter Art (17a-d) in der ersten Schicht (18a) einer entlang der zweiten Orientierung (19b) zur ersten Wicklungszone (25a, 25e, 25i, 25m) für die Gruppe zweiter Art benachbarten zweiten Wicklungszone (25b, 25f, 25j, 25n) für die Gruppe zweiter Art (17a-d),
- der dritte Formleiter (24c) der Gruppe zweiter Art (17a-d) in der dritten Schicht (18c) einer entlang der zweiten Orientierung (19b) zur zweiten Wicklungszone (25b, 25f, 25j, 25n) für die Gruppe zweiter Art (17a-d) benachbarten dritten Wicklungszone (25c, 25g, 25k, 25o) für die Gruppe zweiter Art (17a-d) und
- der vierte Formleiter (24d) der Gruppe zweiter Art (17a-d) in der vierten Schicht (18d) einer entlang der zweiten Orientierung (19b) zur dritten Wicklungszone (25c, 25g, 25k, 25o) für die Gruppe zweiter Art (17a-d) benachbarten vierten Wicklungszone (25d, 25h, 25l, 25p) für die Gruppe zweiter Art (17a-d),
angeordnet sind, wobei der erste Formleiter (25a) solcher Gruppen zweiter Art (17b-d), die bezüglich der Reihenschaltung unmittelbar mit dem vierten Formleiter (25d) einer anderen Gruppe zweiter Art (17a-c)verbunden ist, in der dritten Wicklungszone (25c, 25g, 25k) für die andere Gruppe zweiter Art (17a-c) angeordnet ist.

4. Stator nach den Ansprüchen 2 und 3, wobei
der bezüglich der Reihenschaltung äußere Formleiter (24a) der Gruppe zweiter Art (17a), der bezüglich der Reihenschaltung unmittelbar mit dem bezüglich der Reihenschaltung äußeren Formleiter (22d) einer Gruppe erster Art (16d) verbunden ist, in einer Wicklungszone (20, 25a) angeordnet ist, die entlang der ersten Orientierung (19b) benachbart zur Wicklungszone (20, 23h) ist, in der sich der äußere Formleiter (22d) der Gruppe erster Art (16d) befindet.

5. Stator nach einem der vorhergehenden Ansprüche, wobei sich jede Wicklungszone (20, 23a-g, 25a-p) über genau q+2 Nuten (3) erstreckt.

6. Stator nach Anspruch 5, wobei
sich die zweite und dritte Schicht (18b, 18c) einer jeweiligen Wicklungszone (20, 23a-g, 25a-p) in denselben Nuten (3) befinden, wobei
- die erste Schicht (18a) der Wicklungszone (20, 23a-g, 25a-p) gegenüber der zweiten und dritten Schicht (18b, 18c) um eine Nut (3) entlang der zweiten Orientierung (19b) der Umfangsrichtung versetzt ist und die vierte Schicht (18d) gegenüber der zweiten und dritten Schicht (18b, 18c) um eine Nut (3) entlang der ersten Orientierung (19a) versetzt ist oder
- die erste Schicht (18a) der Wicklungszone (20, 23a-g, 25a-p) gegenüber der zweiten und dritten Schicht (18b, 18c) um eine Nut (3) entlang der ersten Orientierung (19a) der Umfangsrichtung versetzt ist und die vierte Schicht (18d) gegenüber der zweiten und dritten Schicht (18b, 18c) um eine Nut (3) entlang der zweiten Orientierung (19b) versetzt ist.

7. Stator nach einem der Ansprüche 1 bis 4, wobei
sich jede Wicklungszone (20, 23a-g, 25a-p) über genau q+1 Nuten (3) erstreckt.

8. Stator nach Anspruch 7, wobei
- sich die erste bis dritte Schicht (18a-c) einer jeweiligen Wicklungszone (20, 23a-g, 25a-p) in denselben Nuten (3) befinden und die vierte Schicht (18d) der Wicklungszone (20, 23a-g, 25a-p) gegenüber der ersten bis dritten Schicht (18a-c) um eine Nut (3) entlang der ersten Orientierung (19a) oder der zweiten Orientierung (19b) versetzt ist oder
- sich die zweite bis vierte Schicht (18b-d) einer jeweiligen Wicklungszone (20, 23a-g, 25a-p) in denselben Nuten (3) befinden und die erste Schicht (18a) der Wicklungszone (20, 23a-g, 25a-p) gegenüber der zweiten bis vierten Schicht (18b-d) um eine Nut (3) entlang der zweiten Orientierung (19b) oder der ersten Orientierung (19a) versetzt ist.

9. Stator nach einem der vorhergehenden Ansprüche, wobei
jede Wicklungszone (20, 23a-g, 25a-p) 4·q zusammenhängende Aufnahmeplätze für jeweils einen der Formleiter (4, 22a-d, 24a-d) bereitstellt und eine erste Teilwicklungszone (21a) bis q-te Teilwicklungszone (21b) umfasst, die sich jeweils über die vier Schichten (18a-d) erstrecken, wobei die erste Teilwicklungszone (21a) von der ersten Orientierung (19a) aus gesehen die ersten Aufnahmeplätze einer jeweiligen Schicht (18a-d) umfasst und die zweite Teilwicklungszone (21b) die an die Aufnahmeplätze der ersten Teilwicklungszone (21a) unmittelbar angrenzenden Aufnahmeplätze umfasst.

10. Stator nach Anspruch 9, wobei
- die Gruppen erster Art (16a-d) und die Gruppen zweiter Art (17a-d) eines jeweiligen Pfads (15a, 15b) in unterschiedlichen Teilwicklungszonen (21a, 21b) angeordnet sind und/oder
- die Gruppen erster Art (16a-d) unterschiedlicher Pfade (15a, 15b) derselben Phase (U, V, W) in unterschiedlichen Teilwicklungszonen (21a, 21b) und/oder die Gruppen zweiter Art (17a-d) unterschiedlicher Pfade (15a, 15b) derselben Phase (U, V, W) in unterschiedlichen Teilwicklungszonen (21a, 21b) angeordnet sind.

11. Stator nach einem der vorhergehenden Ansprüche, wobei die Formleiter (4, 22a-d, 24a-d) eines jeweiligen Pfads (15a, 15b) bezüglich der Reihenschaltung abwechselnd durch Verbinder erster Art (8, 8a, 8b) und zweiter Art (10) verbunden sind, wobei bezüglich der Reihenschaltung äußere Formleiter (4, 22a, 24d) eines jeweiligen Pfads durch einen Verbinder zweiter Art (10) mit dem bezüglich der Reihenschaltung nächsten Formleiter (22b, 24c) verbunden sind.

12. Stator nach Anspruch 11, wobei
- die Verbinder erster Art (8, 8a, 8b) einstückig mit den durch sie verbundenen Formleitern (4, 22a-d, 24a-d) ausgebildet sind und sich an der ersten Stirnseite (7) aus dem Statorkern (2) heraus erstrecken und/oder
- die Verbinder zweiter Art (10) zwei Verbindungselemente (11a, 11b) umfassen, die sich an der zweiten Stirnseite (9) an die durch den Verbinder zweiter Art (10) verbundenen Formleiter (4, 22a-d, 24a-d) aus dem Statorkern (2) heraus erstreckend anschließen und, insbesondere stoffschlüssig, miteinander elektrisch leitend verbunden sind.

13. Stator nach einem der vorhergehenden Ansprüche, wobei die bezüglich der Reihenschaltung äußeren, zur Gruppe erster Art (16a) gehörenden Formleiter (4, 22a) eines jeweiligen Pfads (15a, 15b) in derselben Wicklungszone (20, 23a) angeordnet sind und die bezüglich der Reihenschaltung äußeren, zur Gruppe zweiter Art (17d) gehörenden Formleiter (4, 24d) des Pfads (15a, 15b) in derselben Wicklungszone (20, 25p) angeordnet sind und diese Wicklungszonen (20, 23a, 25p) benachbart sind.

14. Stator nach einem der vorhergehenden Ansprüche, ferner umfassend eine Anschlusseinrichtung (12), welche
- die bezüglich der Reihenschaltung äußeren, zu einer der Gruppen erster Art (16a) gehörenden Formleiter (22a) der Pfade (15a, 15b) einer jeweiligen Phase (U, V, W) verbindet und für jede Phase (U, V, W) einen Phasenanschluss (13) ausbildet und/oder die bezüglich der Reihenschaltung äußeren, zu einer der Gruppen zweiter Art (17d) gehörenden Formleiter (24d) eines jeweiligen Pfads (15a, 15b) einer jeweiligen Phase (U, V, W) zu einem oder mehreren Sternpunkten (14) verbindet oder
- die bezüglich der Reihenschaltung äußeren, zu einer der Gruppen zweiter Art (17d) gehörenden Formleiter (4, 24d) der Pfade (15a, 15b) einer jeweiligen Phase (U, V, W) verbindet und für jede Phase (U, V, W) einen Phasenanschluss ausbildet und/oder die bezüglich der Reihenschaltung äußeren, zu einer der Gruppen erster Art (16a) gehörenden Formleiter (4, 22a) eines jeweiligen Pfads (15a, 15b) einer jeweiligen Phase (U, V, W) zu einem oder mehreren Sternpunkten (14) verbindet.

15. Elektrische Maschine (101) zum Antreiben eines Fahrzeugs (100), umfassend einen Stator (1) nach einem der vorhergehenden Ansprüche und einen innerhalb des Stators (1) drehbar gelagerten Rotor (102).

## Claims

1. Stator (1) for an electric machine (101), comprising
- a number N ≥ 3 of phases (U, V, W),
- a number P ≥ 2 of pole pairs,
- a number of slots per pole and phase q ≥ 2,
- a stator core (2) which has a plurality of slots (3) formed in a circumferential direction, and
- a plurality of shaped conductors (4, 22a-d, 24a-d) which are arranged in the slots (3) in a radially layered manner in a first to fourth layer (18a-d), wherein the first to fourth layer (18a-d) are designated in accordance with their order in a radial direction; wherein
a first orientation (19a) and a second orientation (19b), opposite to the first orientation (19a), of the circumferential direction are defined; wherein
the shaped conductors (4, 22a-d, 24a-d) form for each phase (U, V, W) at least two paths (15a, 15b), which can be connected to one another in series or in parallel, and are arranged in 2·P winding zones (20, 23a-h, 25a-p) which each extend radially over the four layers (18a-d) and in the circumferential direction over at least q+1 directly adjacent slots (3); wherein
the shaped conductors (4, 22a-d, 24a-d) of each path (15a, 15b) are connected in a series circuit which is implemented by connectors (8, 8a, 8b, 10) arranged at a first end side (7) of the stator core (2) and at a second end side (9), opposite the first end side (7), of the stator core (2); wherein
each path (15a, 15b) has groups of a first type (16a-d) of shaped conductors (4, 22a-d) connected in series and groups of a second type (17a-d) of shaped conductors (24a-d) connected in series; wherein
shaped conductors (22a-d) of the groups of the first type (16a-d) are arranged over the winding zones (20, 23a-h) in the circumferential direction in an alternating manner firstly in the first and fourth layer (18a, 18d) and secondly in the second and third layer (18b, 18c); wherein
shaped conductors (4, 24a-d) of the groups of the second type (17a-d) are arranged in winding zones (20, 23a-h, 25a-p), in which the shaped conductors (4, 22a-d) of the groups of the first type (16a-d) are arranged in the first and fourth layer (18a, 18d), in the second and third layer (18b, 18c) and in winding zones (20, 23a-h, 25a-p), in which the shaped conductors (4, 22a-d) of the groups of the first type (16a-d) are arranged in the second and third layer (18b, 18c), in the first and fourth layer (18a, 18d).

2. Stator according to Claim 1, wherein
the shaped conductors (4, 22a-d) of a respective group of the first type (16a-d) are a first shaped conductor (22a) on the outside with respect to the series circuit, a second shaped conductor (22b) directly connected to the first shaped conductor (22a) with respect to the series circuit, a third shaped conductor (22c) directly connected to the second shaped conductor (22b) with respect to the series circuit and a fourth shaped conductor (22d) directly connected to the third shaped conductor (22c) with respect to the series circuit, and
- the first shaped conductor (22a) of the group of the first type (16a-d) is arranged in the first layer (18a) of a first winding zone (23a, 23c, 23e, 23g) for the group of the first type (16a-d),
- the second shaped conductor (22b) of the group of the first type (16a-d) is arranged in the second layer (18b) of a second winding zone (23b, 23d, 23f, 23h), adjacent to the first winding zone (23a, 23c, 23e, 23g) for the group of the first type (16a-d) along the first orientation (19a), for the group of the first type (16a-d),
- the third shaped conductor (22c) of the group of the first type (16a-d) is arranged in the fourth layer (18d) of the first winding zone (23a, 23c, 23e, 23g) for the group of the first type (16a-d) and
- the fourth shaped conductor (22d) of the group of the first type (16a-d) is arranged in the third layer (18c) of the second winding zone (23b, 23d, 23f, 23h) for the group of the first type (16a-d),
wherein the first winding zone (23c, 23e, 23g) for such groups of the first type (16b-d), which are directly connected to the fourth shaped conductor (22d) of another group of the first type (16a-c) with respect to the series circuit, is adjacent to the second winding zone (23b, 23d, 23f) for the other group of the first type (16a-c) along the first orientation (19a).

3. Stator according to Claim 1 or 2, wherein
the shaped conductors (4, 24a-d) of a respective group of the second type (17a-d) are a first shaped conductor (24a) on the outside with respect to the series circuit, a second shaped conductor (24b) directly connected to the first shaped conductor (24a) with respect to the series circuit, a third shaped conductor (24c) directly connected to the second shaped conductor (24b) with respect to the series circuit and a fourth shaped conductor (24d) directly connected to the third shaped conductor (24c) with respect to the series circuit, and
- the first shaped conductor (24a) of the group of the second type (17a-d) is arranged in the second layer (18b) of a first winding zone (25a, 25e, 25i, 25m) for the group of the second type (17a-d),
- the second shaped conductor (24b) of the group of the second type (17a-d) is arranged in the first layer (18a) of a second winding zone (25b, 25f, 25j, 25n), adjacent to the first winding zone (25a, 25e, 25i, 25m) for the group of the second type along the second orientation (19b), for the group of the second type (17a-d),
- the third shaped conductor (24c) of the group of the second type (17a-d) is arranged in the third layer (18c) of a third winding zone (25c, 25g, 25k, 25o), adjacent to the second winding zone (25b, 25f, 25j, 25n) for the group of the second type (17a-d) along the second orientation (19b), for the group of the second type (17a-d) and
- the fourth shaped conductor (24d) of the group of the second type (17a-d) is arranged in the fourth layer (18d) of a fourth winding zone (25d, 25h, 251, 25p), adjacent to the third winding zone (25c, 25g, 25k, 25o) for the group of the second type (17a-d) along the second orientation (19b), for the group of the second type (17a-d),
wherein the first shaped conductor (25a) of such groups of the second type (17b-d), which first shaped conductor is directly connected to the fourth shaped conductor (25d) of another group of the second type (17a-c) with respect to the series circuit, is arranged in the third winding zone (25c, 25g, 25k) for the other group of the second type (17a-c).

4. Stator according to Claims 2 and 3, wherein
the shaped conductor (24a), on the outside with respect to the series circuit, of the group of the second type (17a), which shaped conductor is directly connected to the shaped conductor (22d), on the outside with respect to the series circuit, of a group of the first type (16d) with respect to the series circuit, is arranged in a winding zone (20, 25a) which, along the first orientation (19b), is adjacent to the winding zone (20, 23h) in which the outer shaped conductor (22d) of the group of the first type (16d) is located.

5. Stator according to any one of the preceding claims, wherein
each winding zone (20, 23a-g, 25a-p) extends over precisely q+2 slots (3).

6. Stator according to Claim 5, wherein
the second and third layer (18b, 18c) of a respective winding zone (20, 23a-g, 25a-p) are located in the same slots (3), wherein
- the first layer (18a) of the winding zone (20, 23a-g, 25a-p) is offset in relation to the second and third layer (18b, 18c) by one slot (3) along the second orientation (19b) of the circumferential direction and the fourth layer (18d) is offset in relation to the second and third layer (18b, 18c) by one slot (3) along the first orientation (19a) or
- the first layer (18a) of the winding zone (20, 23a-g, 25a-p) is offset in relation to the second and third layer (18b, 18c) by one slot (3) along the first orientation (19a) of the circumferential direction and the fourth layer (18d) is offset in relation to the second and third layer (18b, 18c) by one slot (3) along the second orientation (19b).

7. Stator according to one of Claims 1 to 4, wherein each winding zone (20, 23a-g, 25a-p) extends over precisely q+1 slots (3).

8. Stator according to Claim 7, wherein
- the first to third layer (18a-c) of a respective winding zone (20, 23a-g, 25a-p) are located in the same slots (3) and the fourth layer (18d) of the winding zone (20, 23a-g, 25a-p) is offset in relation to the first to third layer (18a-c) by one slot (3) along the first orientation (19a) or the second orientation (19b) or
- the second to fourth layer (18b-d) of a respective winding zone (20, 23a-g, 25a-p) are located in the same slots (3) and the first layer (18a) of the winding zone (20, 23a-g, 25a-p) is offset in relation to the second to fourth layer (18b-d) by one slot (3) along the second orientation (19b) or the first orientation (19a).

9. Stator according to any one of the preceding claims, wherein
each winding zone (20, 23a-g, 25a-p) provides 4·q contiguous receiving spaces for one of the shaped conductors (4, 22a-d, 24a-d) in each case and comprises a first sub-winding zone (21a) to a q-th sub-winding zone (21b), which sub-winding zones each extend over the four layers (18a-d), wherein the first sub-winding zone (21a), as seen from the first orientation (19a), comprises the first receiving spaces of a respective layer (18a-d) and the second sub-winding zone (21b) comprises the receiving spaces directly adjoining the receiving spaces of the first sub-winding zone (21a).

10. Stator according to Claim 9, wherein
- the groups of the first type (16a-d) and the groups of the second type (17a-d) of a respective path (15a, 15b) are arranged in different sub-winding zones (21a, 21b) and/or
- the groups of the first type (16a-d) of different paths (15a, 15b) of the same phase (U, V, W) are arranged in different sub-winding zones (21a, 21b) and/or the groups of the second type (17a-d) of different paths (15a, 15b) of the same phase (U, V, W) are arranged in different sub-winding zones (21a, 21b).

11. Stator according to any one of the preceding claims, wherein
the shaped conductors (4, 22a-d, 24a-d) of a respective path (15a, 15b) are connected in an alternating manner with respect to the series circuit by connectors of the first type (8, 8a, 8b) and second type (10), wherein shaped conductors (4, 22a, 24d), on the outside with respect to the series circuit, of a respective path are connected to the shaped conductor (22b, 24c) next with respect to the series circuit by a connector of the second type (10).

12. Stator according to Claim 11, wherein
- the connectors of the first type (8, 8a, 8b) are formed in one piece with the shaped conductors (4, 22a-d, 24a-d) connected by them and extend out of the stator core (2) at the first end side (7) and/or
- the connectors of the second type (10) comprise two connecting elements (11a, 11b) which adjoin the shaped conductors (4, 22a-d, 24a-d), connected by the connector of the second type (10), at the second end side (9) in a manner extending out of the stator core (2) and are electrically conductively connected to one another, in particular in an integrally bonded manner.

13. Stator according to any one of the preceding claims, wherein
the shaped conductors (4, 22a), on the outside with respect to the series circuit and belonging to the group of the first type (16a), of a respective path (15a, 15b) are arranged in the same winding zone (20, 23a) and the shaped conductors (4, 24d), on the outside with respect to the series circuit and belonging to the group of the second type (17d), of the path (15a, 15b) are arranged in the same winding zone (20, 25p), and these winding zones (20, 23a, 25p) are adjacent.

14. Stator according to any one of the preceding claims, further comprising a connection device (12) which
- connects the shaped conductors (22a), on the outside with respect to the series circuit and belonging to one of the groups of the first type (16a), of the paths (15a, 15b) of a respective phase (U, V, W) and forms a phase connection (13) for each phase (U, V, W) and/or connects the shaped conductors (24d), on the outside with respect to the series circuit and belonging to one of the groups of the second type (17d), of a respective path (15a, 15b) of a respective phase (U, V, W) to form one or more star points (14) or
- connects the shaped conductors (4, 24d), on the outside with respect to the series circuit and belonging to one of the groups of the second type (17d), of the paths (15a, 15b) of a respective phase (U, V, W) and forms a phase connection for each phase (U, V, W) and/or connects the shaped conductors (4, 22a), on the outside with respect to the series circuit and belonging to one of the groups of the first type (16a), of a respective path (15a, 15b) of a respective phase (U, V, W) to form one or more star points (14).

15. Electric machine (101) for driving a vehicle (100), comprising a stator (1) according to one of the preceding claims and a rotor (102) rotatably mounted within the stator (1).

## Revendications

1. Stator (1) pour une machine électrique (101), présentant
- un nombre N ≥ 3 de phases (U, V, W),
- un nombre P ≥ 2 de paires de pôles,
- un nombre d'encoche par pole et par phase q ≥ 2,
- un noyau de stator (2) qui présente plusieurs encoches (3) réalisées dans une direction circonférentielle, et
- plusieurs conducteurs façonnés (4, 22a-d, 24a-d) qui sont disposés dans les encoches (3) en étant empilés radialement dans une première à une quatrième couche (18a-d), la première à la quatrième couche (18a-d) étant désignées selon leur séquence dans une direction radiale ; dans lequel
une première orientation (19a) et une deuxième orientation (19b) opposée à la première orientation (19a) de la direction circonférentielle sont définies ; dans lequel
les conducteurs façonnés (4, 22a-d, 24a-d) réalisent pour chaque phase (U, V, W) au moins deux trajets (15a, 15b) qui peuvent être interconnectés en série ou en parallèle, et sont disposés dans 2-P zones d'enroulement (20, 23ah, 25a-p) qui s'étendent respectivement radialement sur les quatre couches (18a-d) et dans la direction circonférentielle sur au moins q+1 encoches (3) directement adjacentes ; dans lequel
les conducteurs façonnés (4, 22a-d, 24a-d) de chaque trajet (15a, 15b) sont connectés dans un montage en série qui est réalisé par des connecteurs (8, 8a, 8b, 10) disposés sur une première face frontale (7) du noyau de stator (2) et sur une deuxième face frontale (9) du noyau de stator (2), opposée à la première face frontale (7) ; dans lequel
chaque trajet (15a, 15b) présente des groupes d'un premier type (16a-d) de conducteurs façonnés connectés en série (4, 22a-d) et des groupes d'un deuxième type (17a-d) de conducteurs façonnés (24a-d) connectés en série ; dans lequel
les conducteurs façonnés (22a-d) des groupes du premier type (16a-d) sont disposés sur les zones d'enroulement (20, 23a-h) dans la direction circonférentielle en alternance d'une part dans la première et la quatrième couche (18a, 18d) et d'autre part dans la deuxième et la troisième couche (18b, 18c) ; dans lequel
des conducteurs façonnés (4, 24a-d) des groupes du deuxième type (17a-d), dans des zones d'enroulement (20, 23a-h, 25a-p) dans lesquelles les conducteurs façonnés (4, 22a-d) des groupes du premier type (16a-d) sont disposés dans la première et la quatrième couche (18a, 18d), sont disposés dans la deuxième et la troisième couche (18b, 18c), et dans des zones d'enroulement (20, 23a-h, 25a-p), dans lesquelles les conducteurs façonnés (4, 22a-d) des groupes du premier type (16a-d) sont disposés dans la deuxième et la troisième couche (18b, 18c), sont disposés dans la première et la quatrième couche (18a, 18d).

2. Stator selon la revendication 1, dans lequel
les conducteurs façonnés (4, 22a-d) d'un groupe respectif du premier type (16a-d) correspondent à un premier conducteur façonné (22a) extérieur par rapport au montage en série, un deuxième conducteur façonné (22b) connecté directement au premier conducteur façonné (22a) par rapport au montage en série, un troisième conducteur façonné (22c) connecté directement au deuxième conducteur façonné (22b) par rapport au montage en série, et un quatrième conducteur façonné (22d) connecté directement au troisième conducteur façonné (22c) par rapport au montage en série, et
- le premier conducteur façonné (22a) du groupe du premier type (16a-d) est disposé dans la première couche (18a) d'une première zone d'enroulement (23a, 23c, 23e, 23g) pour le groupe du premier type (16a-d),
- le deuxième conducteur façonné (22b) du groupe du premier type (16a-d) est disposé dans la deuxième couche (18b) d'une deuxième zone d'enroulement (23b, 23d, 23f, 23h) pour le groupe du premier type (16a-d), adjacente le long de la première orientation (19a) à la première zone d'enroulement (23a, 23c, 23e, 23g) pour le groupe du premier type (16a-d),
- le troisième conducteur façonné (22c) du groupe du premier type (16a-d) est disposé dans la quatrième couche (18d) de la première zone d'enroulement (23a, 23c, 23e, 23g) pour le groupe du premier type (16a-d), et
- le quatrième conducteur façonné (22d) du groupe du premier type (16a-d) est disposé dans la troisième couche (18c) de la deuxième zone d'enroulement (23b, 23d, 23f, 23h) pour le groupe du premier type (16a-d),
dans lequel la première zone d'enroulement (23c, 23e, 23g) pour des groupes du premier type (16b-d) qui sont reliés directement par rapport au montage en série au quatrième conducteur façonné (22d) d'un autre groupe du premier type (16a-c) est adjacente le long de la première orientation (19a) à la deuxième zone d'enroulement (23b, 23d, 23f) pour l'autre groupe du premier type (16a-c).

3. Stator selon la revendication 1 ou 2, dans lequel les conducteurs façonnés (4, 24a-d) d'un groupe respectif du deuxième type (17a-d) correspondent à un premier conducteur façonné (24a) extérieur par rapport au montage en série, un deuxième conducteur façonné (24b) connecté directement au premier conducteur façonné (24a) par rapport au montage en série, un troisième conducteur façonné (24c) connecté directement au deuxième conducteur façonné (24b) par rapport au montage en série, et un quatrième conducteur façonné (24d) connecté directement au troisième conducteur façonné (24c) par rapport au montage en série, et
- le premier conducteur façonné (24a) du groupe du deuxième type (17a-d) est disposé dans la deuxième couche (18b) d'une première zone d'enroulement (25a, 25e, 25i, 25m) pour le groupe du deuxième type (17a-d),
- le deuxième conducteur façonné (24b) du groupe du deuxième type (17a-d) est disposé dans la première couche (18a) d'une deuxième zone d'enroulement (25b, 25f, 25j, 25n) pour le groupe du deuxième type (17a-d), adjacente le long de la deuxième orientation (19b) à la première zone d'enroulement (25a, 25e, 25i, 25m) pour le groupe du deuxième type,
- le troisième conducteur façonné (24c) du groupe du deuxième type (17a-d) est disposé dans la troisième couche (18c) d'une troisième zone d'enroulement (25c, 25g, 25k, 25o) pour le groupe du deuxième type (17a-d), adjacente le long de la deuxième orientation (19b) à la deuxième zone d'enroulement (25b, 25f, 25j, 25n) pour le groupe du deuxième type (17a-d), et
- le quatrième conducteur façonné (24d) du groupe du deuxième type (17a-d) est disposé dans la quatrième couche (18d) d'une quatrième zone d'enroulement (25d, 25h, 251, 25p) pour le groupe du deuxième type (17a-d), adjacente le long de la deuxième orientation (19b) à la troisième zone d'enroulement (25c, 25g, 25k, 25o) pour le groupe du deuxième type (17a-d),
dans lequel le premier conducteur façonné (25a) des groupes du deuxième type (17b-d) qui sont reliés directement par rapport au montage en série au quatrième conducteur façonné (25d) d'un autre groupe du deuxième type (17a-c) est disposé dans la troisième zone d'enroulement (25c, 25g, 25k) pour l'autre groupe du deuxième type (17a-c).

4. Stator selon les revendications 2 et 3, dans lequel le conducteur façonné (24a) extérieur par rapport au montage en série du groupe du deuxième type (17a), qui est relié directement au conducteur façonné (22d) extérieur par rapport au montage en série d'un groupe du premier type (16d), est disposé dans une zone d'enroulement (20, 25a) qui est adjacente le long de la première orientation (19b) à la zone d'enroulement (20, 23h) dans laquelle se trouve le conducteur façonné extérieur (22d) du groupe du premier type (16d).

5. Stator selon l'une quelconque des revendications précédentes, dans lequel
chaque zone d'enroulement (20, 23a-g, 25a-p) s'étend sur exactement q+2 encoches (3).

6. Stator selon la revendication 5, dans lequel la deuxième et la troisième couche (18b, 18c) d'une zone d'enroulement respective (20, 23a-g, 25a-p) se trouvent dans les mêmes encoches (3), dans lequel
- la première couche (18a) de la zone d'enroulement (20, 23a-g, 25a-p) est décalée par rapport à la deuxième et la troisième couche (18b, 18c) d'une encoche (3) le long de la deuxième orientation (19b) de la direction circonférentielle, et la quatrième couche (18d) est décalée par rapport à la deuxième et la troisième couche (18b, 18c) d'une encoche (3) le long de la première orientation (19a), ou
- la première couche (18a) de la zone d'enroulement (20, 23a-g, 25a-p) est décalée par rapport à la deuxième et la troisième couche (18b, 18c) d'une encoche (3) le long de la première orientation (19a) de la direction circonférentielle, et la quatrième couche (18d) est décalée par rapport à la deuxième et la troisième couche (18b, 18c) d'une encoche (3) le long de la deuxième orientation (19b).

7. Stator selon l'une quelconque des revendications 1 à 4, dans lequel
chaque zone d'enroulement (20, 23a-g, 25a-p) s'étend sur exactement q+1 encoches (3).

8. Stator selon la revendication 7, dans lequel
- la première à la troisième couche (18a-c) d'une zone d'enroulement respective (20, 23a-g, 25a-p) se trouvent dans les mêmes encoches (3), et la quatrième couche (18d) de la zone d'enroulement (20, 23a-g, 25a-p) est décalée par rapport à la première à la troisième couche (18a-c) d'une encoche (3) le long de la première orientation (19a) ou de la deuxième orientation (19b), ou
- la deuxième à la quatrième couche (18b-d) d'une zone d'enroulement respective (20, 23a-g, 25a-p) se trouvent dans les mêmes encoches (3), et la première couche (18a) de la zone d'enroulement (20, 23a-g, 25a-p) est décalée par rapport à la deuxième à la quatrième couche (18b-d) d'une encoche (3) le long de la deuxième orientation (19b) ou de la première orientation (19a).

9. Stator selon l'une quelconque des revendications précédentes, dans lequel
chaque zone d'enroulement (20, 23a-g, 25a-p) fournit 4-q emplacements connexes pour respectivement l'un des conducteurs façonnés (4, 22a-d, 24a-d) et comprend une première zone d'enroulement partielle (21a) à une q-ième zone d'enroulement partielle (21b) qui s'étendent respectivement sur les quatre couches (18a-d), dans lequel la première zone d'enroulement partielle (21a), vue à partir de la première orientation (19a), comprend les premiers emplacements d'une couche respective (18ad), et la deuxième zone d'enroulement partielle (21b) comprend les emplacements directement adjacents aux emplacements de la première zone d'enroulement partielle (21a) .

10. Stator selon la revendication 9, dans lequel
- les groupes du premier type (16a-d) et les groupes du deuxième type (17a-d) d'un trajet respectif (15a, 15b) sont disposés dans différentes zones d'enroulement partielles (21a, 21b), et/ou
- les groupes du premier type (16a-d) de différents trajets (15a, 15b) de la même phase (U, V, W) sont disposés dans différentes zones d'enroulement partielles (21a, 21b) et/ou les groupes du deuxième type (17a-d) de différents trajets (15a, 15b) de la même phase (U, V, W) sont disposés dans différentes zones d'enroulement partielles (21a, 21b).

11. Stator selon l'une quelconque des revendications précédentes, dans lequel
les conducteurs façonnés (4, 22a-d, 24a-d) d'un trajet respectif (15a, 15b) sont reliés par rapport au montage en série en alternance par des connecteurs d'un premier type (8, 8a, 8b) et d'un deuxième type (10), dans lequel des conducteurs façonnés (4, 22a, 24d) extérieurs par rapport au montage en série d'un trajet respectif sont reliés par un connecteur du deuxième type (10) au conducteur façonné (22b, 24c) suivant par rapport au montage en série.

12. Stator selon la revendication 11, dans lequel
- les connecteurs du premier type (8, 8a, 8b) sont réalisés d'un seul tenant avec les conducteurs façonnés (4, 22a-d, 24a-d) reliés par ceux-ci et s'étendent sur la première face frontale (7) hors du noyau de stator (2), et/ou
- les connecteurs du deuxième type (10) comprennent deux éléments de connexion (11a, 11b) qui sont consécutifs sur la deuxième face frontale (9) aux conducteurs façonnés (4, 22a-d, 24a-d), reliés par le connecteur du deuxième type (10), en s'étendant hors du noyau de stator (2), et sont reliés ensemble de manière électriquement conductrice, en particulier par liaison de matière.

13. Stator selon l'une quelconque des revendications précédentes, dans lequel
les conducteurs façonnés (4, 22a) extérieurs par rapport au montage en série et appartenant au groupe du premier type (16a) d'un trajet respectif (15a, 15b) sont disposés dans la même zone d'enroulement (20, 23a), et les conducteurs façonnés (4, 24d) extérieurs par rapport au montage en série et appartenant au groupe du deuxième type (17d) du trajet (15a, 15b) sont disposés dans la même zone d'enroulement (20, 25p), et ces zones d'enroulement (20, 23a, 25p) sont adjacentes.

14. Stator selon l'une quelconque des revendications précédentes, comprenant en outre un dispositif de raccordement (12), qui
- relie les conducteurs façonnés (22a), extérieurs par rapport au montage en série et appartenant à l'un des groupes du premier type (16a), des trajets (15a, 15b) d'une phase respective (U, V, W) et réalise pour chaque phase (U, V, W) un raccordement de phase (13), et/ou relie les conducteurs façonnés (24d), extérieurs par rapport au montage en série et appartenant à l'un des groupes du deuxième type (17d), d'un trajet respectif (15a, 15b) d'une phase respective (U, V, W) en un ou plusieurs points neutres (14), ou
- relie les conducteurs façonnés (4, 24d), extérieurs par rapport au montage en série et appartenant à l'un des groupes du deuxième type (17d), des trajets (15a, 15b) d'une phase respective (U, V, W) et réalise pour chaque phase (U, V, W) un raccordement de phase, et/ou relie les conducteurs façonnés (4, 22a), extérieurs par rapport au montage en série et appartenant à l'un des groupes du premier type (16a), d'un trajet respectif (15a, 15b) d'une phase respective (U, V, W) en un ou plusieurs points neutres (14).

15. Machine électrique (101) permettant d'entraîner un véhicule (100), comprenant un stator (1) selon l'une quelconque des revendications précédentes et un rotor (102) monté rotatif à l'intérieur du stator (1).
